(19) Europäisches Patentamt / European Patent Office / Office européen des brevets

(11) **EP 3 355 246 B1**

(12) **EUROPÄISCHE PATENTSCHRIFT**

(45) Veröffentlichungstag und Bekanntmachung des Hinweises auf die Patenterteilung:
**17.08.2022 Patentblatt 2022/33**

(21) Anmeldenummer: **17000167.1**

(22) Anmeldetag: **31.01.2017**

(51) Internationale Patentklassifikation (IPC):
**G06K 19/067** *(2006.01)* **G06K 7/08** *(2006.01)*

(52) Gemeinsame Patentklassifikation (CPC):
**G06K 19/0672; G06K 7/08**

(54) **VERFAHREN ZUR ERZEUGUNG EINES ZEITABHÄNGIGEN SIGNALS AUF EINEM KAPAZITIVEN FLÄCHENSENSOR UND EIN VERFAHREN ZUR IDENTIFIKATION EINES KARTENÄHNLICHEN OBJEKTS, SOWIE EIN KARTENÄHNLICHES OBJEKT UND DESSEN VERWENDUNG**

METHOD FOR PRODUCING A TIME-DEPENDANT SIGNAL ON A CAPACITIVE AREA SENSOR AND A METHOD FOR IDENTIFYING A CARD-LIKE OBJECT, AND A CARD-LIKE OBJECT AND USE THEREOF

PROCÉDÉ DE PRODUCTION D'UN SIGNAL DÉPENDANT DU TEMPS SUR UN CAPTEUR DE ZONE CAPACITIF ET PROCÉDÉ D'IDENTIFICATION D'UN OBJET DE CARTE, ET OBJET DE CARTE ET UTILISATION DE CELUI-CI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**01.08.2018 Patentblatt 2018/31**

(73) Patentinhaber: **Prismade Labs GmbH**
**09116 Chemnitz (DE)**

(72) Erfinder:
• **Weigelt, Karin**
**09112 Chemnitz (DE)**
• **Thiele, Jan**
**09224 Chemnitz/Grüna (DE)**

(74) Vertreter: **Hertin und Partner**
**Rechts- und Patentanwälte PartG mbB**
**Kurfürstendamm 54/55**
**10707 Berlin (DE)**

(56) Entgegenhaltungen:
EP-A1- 2 431 923    EP-A1- 2 458 526
EP-A2- 0 422 482    EP-A2- 1 065 623
JP-A- H08 118 864   US-A1- 2014 332 587
US-B2- 7 180 304

**Beschreibung**

Die Erfindung betrifft ein Verfahren zur Erzeugung eines zeitabhängigen Signals auf einem kapazitiven Flächensensor und ein Verfahren zur Identifikation eines kartenähnlichen Objekts, sowie ein kartenähnliches Objekt und dessen Verwendung.

Die Erfindung ist auf dem technischen Gebiet der Autoidentifikationstechnologien angesiedelt. Bekannte Technologien zur automatischen gerätebasierten Identifikation von Objekten sind zum Beispiel optische Codes oder RFID-Tags (Radiofrequenzidentifikation). Optische Codes sind in Form von klassischen Strichcodes (Barcodes) oder auch 2D-Barcodes bekannt. Der Nachteil von optischen Codes ist vor allem die einfache Kopierbarkeit, so dass entsprechende gekennzeichnete Objekte nicht optimal gegenüber Fälschungsversuchen geschützt sind.

RFID-Tags sind elektronische Schaltkreise, die mittels Funkwellen ausgelesen werden. Diese Tags sind wesentlich fälschungssicherer im Vergleich zu optischen Codes. Für viele Massenanwendungen sind RFID-Tags jedoch zu teuer, insbesondere weil häufig eine Anwendung in hohen Stückzahlen erforderlich ist. Als weitere alternative Autoidentifikationstechnologie wurden in den letzten Jahren kapazitive Datenträger entwickelt, die die Vorteile der geringen Kosten und der verbesserten Fälschungssicherheit kombinieren. Aus dem Stand der Technik sind kapazitive Datenträger in unterschiedlichen Ausprägungen bekannt, sowie Verfahren zu deren Herstellung und Verfahren und Systeme zur Identifikation der Datenträger.

In WO 2011/154524 A1 wird ein System mit kapazitivem Informationsträger zur Erfassung von Informationen offenbart. Die Erfindung beschreibt ein System, umfassend einen kapazitiven Informationsträger, bei dem auf einem elektrisch nichtleitfähigen Substrat eine elektrisch leitfähige Schicht angeordnet ist und einen Flächensensor, wobei der Informationsträger mit dem Flächensensor in Kontakt gebracht vorliegt. Die elektrisch leitfähige Schicht umfasst eine Touch-Struktur, die einen Touch-Punkt, eine Koppelfläche und eine Leiterbahn umfasst. Eine solche Struktur kann mit einem mit dem Flächensensor verbundenen Datenverarbeitungssystem ausgewertet und softwaretechnisch verarbeitet werden. Die resultierenden Touch-Eingaben auf dem Flächensensor erzeugen ein statisches Bild von mehreren Touch-Punkten, welches vom Datenverarbeitungssystem ausgewertet werden kann.

In DE 10 2012 023 082 A1 ist die Interaktion eines flächigen, tragbaren Datenträgers mit einem Endgerät offenbart. Der tragbare Datenträger, der beispielsweise ein Wertdokument sein kann, umfasst eine elektrisch leitfähige Struktur, die auf zumindest einer Oberfläche und/oder im Inneren des Datenträgers vorgesehen ist, wobei einzelne Bereiche der leitfähigen Struktur elektrisch leitfähig oder kapazitiv miteinander verbunden sind. Das Endgerät weist eine berührungsempfindliche, kapazitive Fläche, insbesondere ein kapazitives Display, auf.

Die DE 10 2013 101 881 A1 beschreibt einen Mehrschichtkörper mit einem Träger und einer darauf angeordneten elektrisch leitfähigen Schicht, umfassend einen Informationsbereich und einen Hintergrundbereich, die voneinander galvanisch getrennt sind. In jedem Informationsbereich ist eine erste Zone mit elektrisch leitfähigem Material bereitgestellt, über deren Gesamtheit hinweg ihr elektrisch leitfähiges Material leitend verbunden ist. In jedem Hintergrundbereich ist eine Mehrzahl von zweiten Zonen mit elektrisch leitfähigem Material bereitgestellt, die galvanisch voneinander getrennt sind. Dieser Mehrschichtkörper kann mittels einer kapazitiv erfassenden Eingabevorrichtung ausgelesen werden.

Diese beiden Anmeldungen zeichnen sich dadurch aus, dass die elektrisch leitfähige Struktur, die den Informationsbereich darstellt, elektrisch leitfähig verbunden ist. Ausgewertet wird jeweils das statische Bild, welches die elektrisch leitfähige Struktur auf einem kapazitiven Endgerät erzeugt.

In US 20100045627 A1 ist ein Verfahren beschrieben, welches die Erzeugung eines Touch-Signals auf einem Berührungsbildschirm durch Form oder Muster eines Objektes sowie dessen Erkennung durch eine Software und das Auslösen einer zugeordneten Aktion beschreibt. Dabei erzeugt die Auflagefläche des gesamten Objekts ein Eingabesignal auf dem Berührungsbildschirm.

Bei den genannten Objekten und Vorrichtungen aus dem Stand der Technik handelt es sich um Objekte oder Vorrichtungen, die entweder vollständig oder teilweise aus elektrisch leitfähigem Material bestehen und ein bestimmtes Eingabemuster auf einem kapazitiven Berührungsbildschirm verursachen. Dieses Eingabemuster, beziehungsweise der sogenannte "Fußabdruck", wird hinsichtlich der relativen Position der Kontaktflächen ausgewertet und einem Datensatz oder einer Aktion zugeordnet. Es wird dabei immer ein statisches Eingabemuster, welches zu einem bestimmten Zeitpunkt vorliegt, ausgewertet. Da bei den genannten Systemen immer ein statisches Eingabemuster ausgewertet wird, kann dieses auch imitiert werden. Damit ist bei den Systemen, die aus dem Stand der Technik bekannt sind, keine Fälschungssicherheit für sicherheitsrelevante Anwendungen gegeben.

Nachteilig bei den Vorrichtungen aus dem Stand der Technik ist, dass die begrenzte Datendichte, das heißt die Anzahl unterschiedlicher Identifikatoren (IDs) pro Fläche, durch die Art der Codierung begrenzt ist, wobei es sich üblicherweise um eine geometrische Codierung handelt. Eine größere Anzahl unterschiedlicher IDs resultiert in einem großen Flächenbedarf, der bei vielen Anwendungen nicht gewährleistet werden kann. Darüber hinaus ist die Benutzerfreundlichkeit für einige der genannten Systeme aus dem Stand der Technik nicht optimal, da der Nutzer darauf achten muss, welcher Teil des Datenträgers auf dem Berührungsbildschirm aufliegen muss und darf und welcher nicht aufliegen darf.

Aufgabe der Erfindung ist es, ein Verfahren zur Erzeugung eines zeitabhängigen Signals auf einem kapazitiven Flächensensor und ein Verfahren zur Identifikation eines kartenähnlichen Objekts, sowie ein kartenähnliches Objekt bereitzustellen, die nicht die Nachteile und Mängel des Standes der Technik aufweisen und darüber hinaus besonders fälschungssicher sind, die Unterbringung von großen Datenmengen auf geringem Raum ermöglichen und besonders benutzerfreundlich ausgebildet sind.

Erfindungsgemäß ist zur Lösung der Aufgabe ein Verfahren zur Erzeugung eines zeitabhängigen Signals auf einem kapazitiven Flächensensor vorgesehen, wobei ein kartenähnliches Objekt eine elektrisch leitfähige Struktur aufweist, die eine Vielzahl von Einzelelementen umfasst, die auf dem kartenähnlichen Objekt angeordnet vorliegen, wobei das zeitabhängige Signal durch die Anordnung der Einzelelemente auf dem kartenähnlichen Objekt festgelegt und durch eine Relativbewegung zwischen einem Eingabemittel und dem kartenähnlichen Objekt erzeugt wird.

Ein kartenähnliches Objekt ist im Sinne der Erfindung bevorzugt ein dreidimensionales Erzeugnis, das in einer besonders bevorzugten Ausführungsform der Erfindung die Form einer Karte, beispielsweise eine Kreditkarte, aufweist. Der durchschnittliche Fachmann weiß, dass eine Karte vorzugsweise flach ausgestaltet ist, das heißt eine Höhe aufweist, die deutlich kleiner ist als eine Länge oder Breite des bevorzugten Objekts. Insbesondere kann ein kartenähnliches Objekt flächig ausgestaltet sein, das heißt eine große Grundfläche gegenüber einer geringen Höhe aufweisen, wobei es im Sinne der Erfindung insbesondere bevorzugt ist, wenn das kartenähnliche Objekt mit der Grundfläche auf einen Flächensensor aufgelegt wird, wodurch vorteilhafterweise eine große Wirkfläche zum Zusammenwirken von Objekt und Flächensensor geschaffen wird. Es ist insbesondere bevorzugt, dass das kartenähnliche Objekt so ausgestaltet ist, dass es auf einen Flächensensor aufgelegt werden kann, ohne diesen zu beschädigen oder zu zerstören. Es ist bevorzugt, dass das kartenähnliche Objekt ein leichtes Material umfasst, das beispielsweise ausgewählt sein kann auf einer Gruppe umfassend Papier, Karton, Kunststoff, Textil, ohne darauf beschränkt zu sein.

Es ist im Sinne der Erfindung bevorzugt, dass ein zeitabhängiges Signal bevorzugt ein zeitlich veränderliches Signal darstellt, das heißt ein Signal, das sich im Laufe der Zeit von sich selbst oder durch eine Einwirkung von außen verändert. Im Kontext der vorliegenden Erfindung wird das zeitabhängige Signal durch die Anordnung der Einzelelemente auf dem kartenähnlichen Objekt festgelegt und durch eine Relativbewegung zwischen einem Eingabemittel und dem kartenähnlichen Objekt erzeugt. Es ist im Sinne der Erfindung bevorzugt, dass die elektrisch leitfähige Struktur mindestens zwei Einzelelemente umfasst. Es kann aber für einige Anwendungen der Erfindung bevorzugt sein, dass die elektrisch leitfähige Struktur eine größere Zahl von Einzelelementen umfasst. Für verschiedene Anwendungen kann es im Sinne der Erfindung auch bevorzugt sein, dass ein kartenähnliches Objekt mehr als eine elektrisch leitfähige Struktur umfasst. Diese können beispielsweise parallel zueinander oder um einen Winkel gegeneinander verdreht auf dem Objekt angeordnet vorliegen, wodurch sich komplexe Interaktionsmöglichkeiten zwischen den einzelnen elektrisch leitfähigen Strukturen ergeben können.

Es kann im Sinne der Erfindung bevorzugt sein, dass die Einzelelemente, die die elektrisch leitfähige Struktur bilden, zueinander ähnlich sind, das heißt beispielsweise aus Streifen mit unterschiedlicher Länge und/oder Breite bestehen, die nebeneinander angeordnet sein können und beispielsweise einen gleichen oder unterschiedlichen Abstand zueinander aufweisen. Solche Einzelelemente sind bevorzugt insofern ähnlich zueinander, dass alle Einzelelemente streifenförmig ausgebildet sind, auch wenn sie sich in ihrer Länge unterscheiden können. Es kann aber auch bevorzugt sein, dass die Einzelelemente einer elektrisch leitfähigen Struktur untereinander nicht ähnlich sind, also unterschiedliche Formen aufweisen.

In einer weiteren bevorzugten Ausgestaltung der Erfindung liegen die Einzelelemente der elektrisch leitfähigen Struktur galvanisch getrennt voneinander vor. Die bevorzugte räumliche und/oder galvanische Trennung der Einzelelemente der elektrisch leitfähigen Struktur voneinander kann beispielsweise dadurch erreicht werden, dass jeweils zwei Einzelelemente beabstandet voneinander vorliegen, wobei dieser Abstand zwischen den Einzelelementen innerhalb einer elektrisch leitfähigen Struktur gleich sein oder variieren kann. Es ist im Sinne der Erfindung insbesondere bevorzugt, dass die elektrisch leitfähige Struktur mindestens zwei voneinander galvanisch getrennte Einzelelemente umfasst, wobei die Einzelelemente in einer Ebene angeordnet vorliegen. Der Begriff "in einer Ebene" bedeutet im Sinne der Erfindung bevorzugt, dass die elektrisch leitfähige Struktur beispielsweise auf der Vorderund/oder der Rückseite des bevorzugt flächig ausgestalteten kartenähnlichen Objekts angeordnet vorliegt.

Der Begriff "kapazitiver Flächensensor" bezeichnet im Sinne der Erfindung bevorzugt solche touchscreenaufweisende Vorrichtungen, die in der Lage sind, äußere Einwirkungen oder Beeinflussungen, beispielsweise Kontakte, der Touchscreenfläche wahrzunehmen und mittels angegliederter Logik auszuwerten. Solche Flächensensoren werden beispielsweise benutzt, um Maschinen einfacher zu bedienen. Um eine Eingabe an einem kapazitiven Bildschirm, der auch als Berührungsbildschirm, Touchscreen oder Flächensensor bezeichnet wird, vorzunehmen, können neben den Fingern auch spezielle Eingabestifte oder ähnliche Vorrichtungen genutzt werden, die im Sinne der Erfindung bevorzugt als Eingabemittel bezeichnet werden. Diese sind vorzugsweise in der Lage, eine kapazitive Kopplung zwischen Zeilen- und Spaltenelektroden innerhalb des Flächensensors zu ändern. Der kapazitive, bevorzugt berührungsempfindliche Bildschirm ist vorzugsweise dafür eingerichtet, die Position des Eingabemittels zu detektieren.

Üblicherweise werden Flächensensoren in einem elektrischen Gerät bereitgestellt, wobei es sich um Smartphones, Handys, Displays, Tablet-PCs, Tablet-Notebooks, Touchpad-Geräte, Grafiktabletts, Fernseher, PDAs, MP3-Player, Trackpads und/ oder kapazitive Eingabegeräte handeln kann, ohne darauf begrenzt zu sein. Touchscreens werden vorzugsweise auch als Tastschirme, Flächensensoren oder Sensorbildschirme bezeichnet. Ein Flächensensor muss sich nicht zwingend in Zusammenhang mit einem Display oder einem Touchscreen verwendet werden. Es kann im Sinne der Erfindung ebenso bevorzugt sein, dass der Flächensensor sichtbar oder nicht-sichtbar in Geräten, Objekten und/oder Vorrichtungen integriert vorliegt.

Es kann im Sinne der Erfindung beispielsweise bevorzugt sein, multitouchfähige Flächensensoren zu verwenden. Solche Flächensensoren sind vorzugsweise dafür eingerichtet, mehrere Berührungen gleichzeitig zu erkennen, wodurch zum Beispiel Elemente, die auf einem Touchscreen angezeigt werden, gedreht oder skaliert werden können.

Flächensensoren umfassen insbesondere mindestens einen aktiven Schaltkreis, der vorzugsweise als Touch-Controller bezeichnet wird, welcher mit einer Struktur von Elektroden verbunden sein kann. Es sind im Stand der Technik Flächensensoren bekannt, deren Elektroden Gruppen von Elektroden umfassen, die sich beispielsweise in ihrer Funktion voneinander unterscheiden. Dabei kann es sich zum Beispiel um Sende- und Empfangselektroden handeln, die in einer besonders bevorzugten Anordnung in Spalten- und Zeilenform angeordnet vorliegen können, das heißt insbesondere Knotenpunkte bilden, an denen sich mindestens je eine Sende- und eine Empfangselektrode miteinander überkreuzen oder überlappen. Vorzugsweise sind die sich überkreuzenden Sende- und Empfangselektroden im Bereich der Knotenpunkte so zueinander ausgerichtet, dass sie miteinander im Wesentlichen 90 °-Winkel einschließen. Es ist im Sinne der Erfindung insbesondere bevorzugt, dass sich zwischen den Sende- und Empfangselektroden des Flächensensors ein elektrostatisches Feld ausbildet, das empfindlich auf Veränderungen reagiert, wie zum Beispiel durch das Inkontaktbringen der Oberfläche eines Flächensensors mit einer elektrisch leitfähigen Vorrichtung beziehungsweise durch dessen Erdung, das heißt einem Abfluss von-elektrischer Ladung.

Es ist im Sinne der Erfindung bevorzugt, dass der Touch-Controller die Elektroden vorzugsweise so ansteuert, dass zwischen jeweils einer oder mehreren Sendeelektroden und einer oder mehreren Empfangselektroden ein Signal übertragen wird, bei dem es sich vorzugsweise um ein elektrisches Signal, beispielsweise eine Spannung, eine Stromstärke oder ein Potential(unterschied) handeln kann. Diese Signale innerhalb des Flächensensors, die im Rahmen der Erfindung zeitabhängige Signale sind, können durch die Anordnung der Einzelelemente auf dem kartenähnlichen Objekt festgelegt werden.

Es ist im Sinne der Erfindung bevorzugt, dass das zeitabhängige Signal, das auf einem Flächensensor durch eine Relativbewegung zwischen einem Eingabemittel und dem kartenähnlichen Objekt erzeugt wird, durch die Anordnung der Einzelelemente auf dem kartenähnlichen Objekt verändert wird und sich insbesondere unterscheidet von einer Eingabe eines Eingabemittels auf einem Flächensensor, die direkt, das heißt vorzugsweise ohne die Verwendung eines kartenähnlichen Objekts, erfolgt. Es werden insbesondere zwei Situationen unterschieden: zum einen eine direkte dynamische Eingabe auf einem Flächensensor mit einem Eingabemittel und zum anderen eine dynamische Eingabe, bei der zwischen Eingabemittel und Flächensensor ein kartenähnliches Objekt zwischengeschaltet ist. Dabei ist es im Sinne der Erfindung bevorzugt, die direkte Eingabe mit einem Eingabemittel auf dem Flächensensor als Referenz-Eingabe zu bezeichnen. Es ist im Sinne der Erfindung bevorzugt, dass durch die Anordnung der Einzelelemente auf dem kartenähnlichen Objekt eine Veränderung der direkten dynamischen Eingabe erfolgt, wodurch auf dem Flächensensor ein zeitabhängiges Signal erzeugt wird. In einer bevorzugten Ausführungsform der Erfindung ist es vorgesehen, dass die Einzelelemente der elektrisch leitfähigen Struktur hinsichtlich Größe, Abstand und Form so ausgebildet sind, dass das aus der Relativbewegung resultierende zeitabhängige Signal auf dem kapazitiven Flächensensor gegenüber der Referenz-Eingabe mit dem Eingabemittel, die vorzugsweise ohne Verwendung des kartenähnlichen Objekts erfolgt, verändert ist. Dieser Umwandlungsprozess wird im Sinne der Erfindung bevorzugt als Modulation, Festlegung, Veränderung, Verzerrung oder Verschiebung bezeichnet.

In einer bevorzugten Ausgestaltung der Erfindung ist das zeitabhängige Signal bezüglich Position, Geschwindigkeit, Richtung, Form, Unterbrechung des Signals, Frequenz und/oder Signalstärke mindestens teilweise verändert ist. Ausgehend von einer beispielhaften Eingabe in Form einer geraden, strichförmigen Bewegung auf einem Einzelelement der elektrisch leitfähigen Struktur bedeutet dies im Sinne der Erfindung bevorzugt, dass das erzeugte zeitabhängige Signal aufgrund der Modulation durch das kartenähnliche Objekt, beziehungsweise ihre elektrisch leitfähige Struktur, gegenüber der geraden, strichförmigen Eingabe des Eingabemittels eine abweichende Position, Richtung, Form und/oder Signalstärke aufweisen kann, das heißt beispielsweise räumlich versetzt, verzerrt und/oder verschoben vom Flächensensor erkannt wird, eine andere Form als die gerade, strichförmige Bewegung aufweist, in eine andere Richtung zeigt oder eine unerwartete Signalstärke aufweist.

Es kann im Sinne der Erfindung auch bevorzugt sein, dass Abweichungen bei der Geschwindigkeit auftreten, das heißt eine schnelle Bewegung des Eingabemittels in ein langsames zeitabhängiges Signal moduliert wird, oder es zu Unterbrechung des Signals kommt, beispielsweise wenn eine kontinuierliche Bewegung auf der elektrisch leitfähigen Struktur des kartenähnlichen Objekts erfolgt, wobei die elektrisch leitfähige Struktur, bevorzugt bewusst, Lücken aufweist, so dass das zeitabhängige Signal, das vom Flächensensor detektiert wird, Unterbrechungen und/oder Pausen aufweist, das heißt beispielsweise nicht mehr kontinuierlich ist und/oder beispielsweise "hüpft". Es kann darüber hinaus bevorzugt sein, dass durch die Ausgestaltung der elektrisch leitfähigen Struktur auf dem kartenähnlichen Objekt das erzeugte zeitabhängige Signal Unterbrechungen aufweist. Es kann auch bevorzugt sein, dass eine regelmäßige Abfolge von Signalportionen erzeugt wird, die gemeinsam das zeitabhängige Signal bilden, dem eine Frequenz zugeordnet werden kann.

Es ist im Sinne der Erfindung bevorzugt, dass die Eingabe auf dem kartenähnlichen Objekt mit einem Eingabemittel erfolgt. Die Bewegung des Eingabemittels auf dem kartenähnlichen Objekt kann beispielsweise eine geradlinige Bewegung in Form eines Strichs sein. Eine solche strichförmige Bewegung würde von einem Flächensensor, wenn sie direkt auf dem berührungsempfindlichen Display ausgeführt würde, als strichförmige Eingabe erkannt. Wenn jedoch die strichförmige Bewegung auf einem erfindungsgemäßen kartenähnlichen Objekt, das eine elektrisch leitfähige Struktur aufweist, ausgeführt wird, so "sieht" der Flächensensor eine Momentaufnahme, die durch die räumliche Ausgestaltung der elektrisch leitfähigen Struktur des kartenähnlichen Objekts verändert ist, das heißt in der Regel nicht mehr strichförmig sein wird, wenn nicht zufällig alle Elemente der elektrisch leitfähigen Struktur ausschließlich symmetrisch und/oder kongruent zueinander angeordnet vorliegen. Somit unterscheiden sich die tatsächliche Bewegung des Eingabemittels auf dem Objekt und die Wahrnehmung des kapazitiven Flächensensors von dieser Bewegung, wobei diese Umwandlung von dem kartenähnlichen Objekt durch die räumliche Anordnung der Bestandteile und/oder Elemente der elektrisch leitfähigen Struktur bewirkt wird und im Sinne der Erfindung bevorzugt als Modulation, Festlegung, Veränderung, Verzerrung oder Verschiebung bezeichnet wird. Es ist im Sinne der Erfindung bevorzugt, dass die Bewegung des Eingabemittels auf dem kartenähnlichen Objekt als Eingabe bezeichnet wird und die Wahrnehmung des Flächensensors, also das, was der Flächensensor von der Eingabe, moduliert durch das Objekt, erkennt, als zeitabhängiges Signal.

Die Erzeugung des zeitabhängigen Signals auf dem kapazitiven Flächensensor erfolgt bevorzugt durch die Umwandlung einer Eingabe durch das kartenähnliche Objekt in ein zeitabhängiges Signal, wobei das zeitabhängige Signal vorzugsweise von dem Objekt auf den kapazitiven Flächensensor übertragen werden kann. Diese Formulierung bedeutet im Sinne der Erfindung bevorzugt, dass das zeitabhängige Signal durch eine Relativbewegung zwischen einem Eingabemittel und dem kartenähnlichen Objekt erzeugt wird, wobei vom Flächensensor vorzugsweise ein zeitlich veränderliches Signal detektiert wird. Da die Eingabe auf dem kartenähnlichen Objekt und die Erkennung auf dem Flächensensor erfolgen, wird im Sinne der Erfindung bevorzugt von einer Übertragung des Signals gesprochen.

Da die elektrisch leitfähige Struktur sehr flexibel gestaltet werden kann und darüber hinaus durch die Vorgabe verschiedener Bewegungsmöglichkeiten auf dem kartenähnlichen Objekt verschiedene Bewegungen des Eingabemittels denkbar sind, ist es möglich, ein Verfahren bereitzustellen, mit dem kartenähnlichen Objekt eine sehr hohe Datendichte abrufbar ist. Es war vollkommen überraschend, dass die Vorrichtung mit einer elektrisch leitfähigen Struktur gemäß der vorliegenden Erfindung beispielsweise eine Datenkapazität von bevorzugt mindestens 12 bit, besonders bevorzugt mindestens 16 bit aufweisen kann. Es war völlig überraschend, dass diese Datenkapazität bevorzugt auf einer kleinen Oberfläche realisiert werden kann und somit zu einer hohen Datendichte führt. Darüber hinaus ist das Verfahren besonders nutzerfreundlich, da bei seiner Nutzung das kartenähnliche Objekt unkompliziert auf den Flächensensor aufgelegt wird. Es muss nicht mehr, wie bei konventionellen Datenträgern und Signalübertragungsverfahren zwischen Flächensensoren und Datenträgern darauf geachtet werden, dass bestimmte Bereiche des kartenähnlichen Objekts nicht oder auf besonderen Bereichen des Flächensensors aufliegen.

Die Erzeugung des zeitabhängigen Signals erfolgt im Rahmen der Erfindung durch eine Relativbewegung zwischen einem Eingabemittel und dem kartenähnlichen Objekt. Das bedeutet im Sinne der Erfindung bevorzugt, dass entweder das Eingabemittel gegenüber dem kartenähnlichen Objekt bewegt wird oder dass das kartenähnliche Objekt gegenüber dem Eingabemittel bewegt wird oder dass sich sowohl das Eingabemittel, als auch das Objekt bewegen, und zwar vorzugsweise nicht in die gleiche Richtung und mit der gleichen Geschwindigkeit, da dies eine Parallelbewegung hervorrufen würde, die gerade keine Relativbewegung im Sinne der Erfindung darstellt. Es ist im Sinne der Erfindung insbesondere bevorzugt, dass die Lage, Richtung und/oder Geschwindigkeit der Relativbewegung die Erzeugung des zeitabhängigen Signals beeinflusst und insbesondere bestimmt, wie das zeitabhängige Signal räumlich beschaffen ist. Dies erfolgt insbesondere in Zusammenwirken mit der optischen Gestalt der elektrisch leitfähigen Struktur, mit der eine durch die Relativbewegung bewirkte Eingabe in das zeitabhängige Signal umgewandelt und/oder moduliert.

Es ist im Sinne der Erfindung bevorzugt, dass die Relativbewegung zwischen dem Eingabemittel und dem kartenähnlichen Objekt bevorzugt als zweiter Kontakt bezeichnet wird, der im Kontext der vorliegenden Erfindung stets dynamisch ausgebildet ist.

In einem zweiten Aspekt betrifft die Erfindung ein Verfahren zur Identifikation eines kartenähnlichen Objekts, das die folgenden Schritte umfasst:

a) Bereitstellung des kartenähnlichen Objekts mit einer elektrisch leitfähigen Struktur, die eine Vielzahl von Einzelelementen umfasst,
b) Auflegen des kartenähnlichen Objekts auf einen kapazitiven Flächensensor, wodurch ein erster Kontakt ausgebildet wird,

c) Ausführen einer Relativbewegung zwischen einem Eingabemittel und dem kartenähnlichen Objekt,

d) Erzeugung eines zeitabhängigen Signals in Abhängigkeit von der Relativbewegung,

e) Auswertung des zeitabhängigen Signals durch das den Flächensensor beinhaltende Gerät zur Identifikation des kartenähnlichen Objekts

wobei das zeitabhängige Signal, das auf dem kapazitiven Flächensensor erzeugt wird, durch die Anordnung der Einzelelemente auf dem kartenähnlichen Objekt festgelegt wird.

Die oben genannten Vorteile und überraschenden technischen Wirkungen des Verfahrens zur Erzeugung des zeitabhängigen Signals gelten auch für das Identifikationsverfahren. Analog gelten die Vorteile und überraschenden technischen Wirkungen des Identifikationsverfahrens auch für das Verfahren zur Erzeugung des zeitabhängigen Signals. Es ist insbesondere bevorzugt, dass das Identifikationsverfahren auch zur Erzeugung eines zeitabhängigen Signals verwendet und/oder das Verfahren zur Erzeugung eines zeitabhängigen Signals auch zur Identifikation eines kartenähnlichen Objekts verwendet werden kann.

Der Begriff "Identifikation" bedeutet im Sinne der Erfindung bevorzugt, dass ein kartenähnliches Objekt durch den Flächensensor erkannt wird und beispielsweise einem im elektrischen Gerät, welches den Flächensensor beinhaltet, hinterlegten Datensatz zugeordnet werden kann. Dabei kann der Datensatz beispielsweise auch nicht im elektrischen Gerät direkt hinterlegt sein, aber für diesen zugänglich sein, indem er beispielsweise auf einem Server, im Internet und/oder in einer Cloud abrufbar ist. Die Erkennung des kartenähnlichen Objekts durch den Flächensensor erfolgt insbesondere durch die Erkennung der elektrisch leitfähigen Struktur, die auf dem kartenähnlichen Objekt angeordnet ist. Diese elektrisch leitfähige Struktur wird insbesondere durch die Einzelelemente bestimmt, die vorzugsweise in ihrer Gesamtheit die elektrisch leitfähige Struktur bilden. Es ist bevorzugt, dass das Identifikationsverfahren mit einem kartenähnlichen Objekt durchgeführt wird, das einen weiteren Aspekt der vorliegenden Erfindung bildet und später ausführlich beschrieben wird. Es kann aber auch bevorzugt sein, dass Verfahren mit einem anderen Objekt auszuführen, solange es eine elektrisch leitfähige Struktur mit Einzelelementen aufweist.

Das kartenähnliche Objekt wird auf den Flächensensor aufgelegt, wodurch ein erster Kontakt ausgebildet wird. Es ist im Sinne der Erfindung insbesondere bevorzugt, dass ein erster Kontakt zwischen dem Flächensensor und dem kartenähnlichen Objekt gebildet wird. In einer weiteren Ausgestaltung der Erfindung, die sich sowohl auf das Verfahren zur Erzeugung des zeitabhängigen Signals, als auch auf das Identifikationsverfahren bezieht, umfasst die Erfindung einen zweiten Kontakt, der vorzugsweise zwischen dem kartenähnlichen Objekt und dem Eingabemittel gebildet wird. Es ist im Sinne der Erfindung bevorzugt, dass diese Kontakte auch als Wirkkontakte bezeichnet werden. Es ist demnach im Sinne der Erfindung bevorzugt, dass die Erzeugung des zeitabhängigen Signals auf dem kapazitiven Flächensensor und/oder die Identifikation des kartenähnlichen Objekts einen ersten Kontakt und einen zweiten Kontakt umfasst, wobei ein erster Kontakt zwischen dem kartenähnlichen Objekt und dem kapazitiven Flächensensor besteht und ein zweiter Kontakt zwischen dem kartenähnlichen Objekt und dem Eingabemittel, wobei mindestens der zweite Kontakt dynamisch ausgebildet ist.

Es ist im Sinne der Erfindung insbesondere bevorzugt, dass das kartenähnliche Objekt auf dem Flächensensor aufgelegt wird, wobei das kartenähnliche Objekt von einem Eingabemittel berührt wird, wodurch bevorzugt der zweite Kontakt im Sinne der Erfindung hergestellt wird. Vorzugsweise berühren das Eingabemittel und der Flächensensor einander nicht, das heißt es besteht vorzugsweise kein direkter körperlicher Kontakt zwischen dem Eingabemittel und dem Flächensensor. Allerdings besteht zwischen dem Eingabemittel und dem Flächensensor vorzugsweise eine räumliche Beziehung, insofern als dass eine Relativbewegung zwischen dem Eingabemittel und dem Flächensensor festgestellt werden kann oder nicht. Es ist im Sinne der vorliegenden Erfindung insbesondere bevorzugt, dass sowohl der erste Kontakt, als auch der zweite Kontakt gleichzeig miteinander vorliegen.

Im Folgenden werden zwei besonders bevorzugte Ausgestaltungen der Erfindung hinsichtlich der Kontakte und der räumlichen Beziehungen zwischen den drei Elementen 1) kartenähnliches Objekt, 2) Flächensensor und 3) Eingabemittel beschrieben. In einer ersten bevorzugten Ausführungsform der Erfindung ist der erste Kontakt, der vorzugsweise zwischen kartenähnlichen Objekt und Flächensensor besteht, stationär ausgebildet, der zweite Kontakt, der vorzugsweise zwischen Eingabemittel und kartenähnlichen Objekt besteht, dynamisch ausgebildet und die räumliche Beziehung zwischen Eingabemittel und Flächensensor ist dynamisch. Dabei kann das kartenähnliche Objekt beispielsweise auf dem Flächensensor angeordnet und/oder auf diesen aufgelegt werden, ohne dass das Objekt bewegt wird, während das Eingabemittel auf dem kartenähnlichen Objekt bewegt wird. Daraus ergibt sich inhärent, dass sich das Eingabemittel auch relativ zu dem nichtbewegten Flächensensor bewegt, weswegen die räumliche Beziehung zwischen Flächensensor und Eingabemittel im Kontext dieser bevorzugten Ausführungsform der Erfindung bevorzugt als dynamisch beschrieben wird.

In einer zweiten bevorzugten Ausführungsform der Erfindung ist der erste Kontakt, der vorzugsweise zwischen kartenähnlichen Objekt und Flächensensor besteht, dynamisch ausgebildet, der zweite Kontakt, der vorzugsweise zwischen Eingabemittel und kartenähnlichen Objekt besteht, ebenfalls dynamisch und die räumliche Beziehung zwischen Eingabemittel und Flächensensor stationär ausgebildet. In dieser bevorzugten Ausführungsform der Erfindung kann das kartenähnliche Objekt beispielsweise auf dem Flächensensor angeordnet und/oder auf diesen aufgelegt werden. Zusätzlich wird das Eingabemittel in dieser bevorzugten Ausführungsform auf das kartenähnliche Objekt aufgelegt und das Objekt unter dem Eingabemittel "durchgezogen". Dadurch bewegt sich das Eingabemittel gegenüber dem Flächensensor nicht, das heißt es findet keine Relativbewegung zwischen Eingabemittel und Flächensensor statt und Eingabemittel und Flächensensor sind räumlich stationär zueinander angeordnet. Andererseits bewegen sich Eingabemittel und kartenähnliches Objekt sowie kartenähnliches Objekt und Flächensensor zueinander, was vorteilhafterweise durch die Weg- oder Durchziehbewegung des kartenähnlichen Objekts erreicht wird.

Beiden Ausführungsformen ist bevorzugt gemein, dass der zweite Kontakt zwischen kartenähnlichen Objekt und Eingabemittel stets dynamisch ausgebildet ist.

Wenn der Kontakt zwischen kartenähnlichen Objekt und Eingabemittel, der im Sinne der Erfindung vorzugsweise als zweiter Kontakt bezeichnet wird, dynamisch ausgestaltet ist, kann es sich bei der Bewegung des Eingabemittels beispielsweise um eine Gleit-, Wisch-, Streich-, Zug- oder Schubbewegung handeln, ohne drauf beschränkt zu sein. Es kann im Sinne der Erfindung auch bevorzugt sein, dass mindestens ein Bereich auf dem kartenähnlichen Objekt optisch markiert oder haptisch hervorgehoben ist, der für die Berührung und/oder Kontaktierung durch ein Eingabemittel eingerichtet ist. Eine haptische Hervorhebung kann beispielsweise durch das Aufbringen eines Lacks erreicht werden, der vorzugsweise stellenweise auf der elektrisch leitfähigen Struktur, insbesondere dem Eingabebereich, aufgebracht wird und dort die Stellen der elektrisch leitfähigen Struktur markiert, die mit dem Eingabemittel berührt werden sollen, um die dynamische Eingabe zu erzeugen. Tests haben gezeigt, dass ein Finger, der als Eingabemittel verwendet wird, besonders gut mit einer Lackmarkierung über den Eingabebereich der elektrisch leitfähigen Struktur geführt werden kann, indem er in einem Anfangsbereich auf den lackierten Bereich der elektrisch leitfähigen Struktur aufgesetzt wird und dann dem lackierten Bereich folgt. Dabei hat es sich als besonders vorteilhaft erwiesen, wenn der lackierte Bereich streifenförmig ausgebildet ist und eine bevorzugte Breite im Größenordnungsbereich eines menschlichen Fingers aufweist. Darüber hinaus kann die haptische Hervorhebung auch durch Druckweiterverarbeitungsverfahren, wie z.B. Rillen, Prägen und/oder Falten, erreicht werden, wodurch vorzugsweise dreidimensionale Führungslinien erzeugt werden, die dem Nutzer den Eingabebereich verdeutlichen.

Im Falle, dass das kartenähnliche Objekt gegenüber dem Eingabemittel bewegt wird, kann es sich beispielsweise um eine Weg- oder Durchziehbewegung handeln, bei der beispielsweise ein Finger als Eingabemittel locker auf dem Objekt aufgelegt wird, das auf einem Flächensensor angeordnet ist, und das Objekt beispielsweise zug- oder ruckartig zwischen Eingabemittel und Flächensensor weggezogen und/oder entfernt wird.

Es ist im Sinne der Erfindung bevorzugt, dass das zeitabhängige Signal durch eine Relativbewegung zwischen einem Eingabemittel und dem kartenähnlichen Objekt erzeugt wird. Indem sich das Eingabemittel und das kartenähnliche Objekt relativ zueinander bewegen, wird insbesondere eine Relativbewegung zwischen dem Eingabemittel und der elektrisch leitfähigen Struktur auf dem kartenähnlichen Objekt bewirkt, so dass vorzugsweise mindestens ein Einzelelement der elektrisch leitfähigen Struktur durch das Eingabemittel kontaktiert wird, wodurch es vorteilhafterweise "aktiviert", das heißt für den Flächensensor "sichtbar" wird.

Dieses Sichtbarwerden beruht auf einer Kopplung zwischen dem kapazitiven Flächensensor und der elektrisch leitfähigen Struktur, wenn beispielsweise eine Erdung der elektrisch leitfähigen Struktur stattfindet, beispielsweise durch die Berührung der Struktur oder eines Elementes der Struktur durch ein Eingabemittel. Wenn ein Eingabemittel die Einzelelemente der elektrisch leitfähigen Struktur berührt, kann es zu einem Ladungsträgeraustausch zwischen Eingabemittel und Struktur kommen. Dies führt im Sinne der Erfindung bevorzugt zu einer Änderung des elektrostatischen Feldes zwischen den Elektroden in einem Flächensensor und/oder zu einer messbaren Änderung der Kapazität. Die Änderung des elektrostatischen Feldes kann beispielsweise durch ein Inkontaktbringen des Flächensensors mit einem kartenähnlichen Objekt bewirkt werden, wodurch im Sinne der Erfindung ein erster Kontakt gebildet wird, wobei das kartenähnliche Objekt gleichzeitig in Kontakt mit einem Eingabemittel vorliegt, wodurch im Sinne der Erfindung ein zweiter Kontakt gebildet wird. Es ist demnach im Sinne der Erfindung bevorzugt, dass der erste Kontakt und der zweite Kontakt gleichzeitig bestehen und das kartenähnliche Objekt zwischen Flächensensor und Eingabemittel angeordnet vorliegt. Im Kontext der vorliegenden Erfindung bewirkt die dynamische Ausbildung des zweiten Kontakts zwischen kartenähnlichen Objekt und Eingabemittel, dass das Signal zwischen den Elektroden im Flächensensor verändert wird. In der Regel wird das Signal vermindert, weil das Eingabemittel einen Teil des Signals von der Sendeelektrode aufnimmt und so ein geringeres Signal an der Empfangselektrode ankommt. Es ist im Sinne der Erfindung insbesondere bevorzugt, dass die Einzelelemente der elektrisch leitfähigen Struktur hinsichtlich Größe, Abstand und Form so ausgebildet sind, dass das aus der Relativbewegung resultierende zeitabhängige Signal auf dem kapazitiven Flächensensor gegenüber einer Referenz-Eingabe mit dem Eingabemittel, die ohne Verwendung des kartenähnlichen Objekts erfolgt, verändert sein kann.

Wenn sich beispielsweise das Eingabemittel über die elektrisch leitfähige Struktur des kartenähnlichen Objekts bewegt und somit im Sinne der Erfindung vorzugsweise einen dynamischen zweiten Kontakt erzeugt, werden zum Beispiel nacheinander die einzelnen Elemente, die gemeinsam die elektrisch leitfähige Struktur bilden und bevorzugt als Einzelelemente bezeichnet werden, abgefahren, das heißt beispielsweise nacheinander aktiviert. Es kann beispielsweise bevorzugt sein, dass mindestens ein oder zwei oder mehrere Einzelelemente gemeinsam und/oder gleichzeitig vom Eingabemittel berührt werden, wodurch auf dem Flächensensor eine zeitlich veränderliches Signal erzeugt wird, das die räumliche Anordnung der "berührten" Einzelelemente auf dem kartenähnlichen Objekt widerspiegelt.

Dabei wird das zeitabhängige Signal, das vom Flächensensor detektiert wird, nicht allein durch die Bewegung des Eingabemittels relativ zum kartenähnlichen Objekt gebildet, sondern insbesondere auch durch die Anordnung der Einzelelemente der elektrisch leitfähigen Struktur auf dem kartenähnlichen Objekt. Es ist im Sinne der Erfindung besonders bevorzugt, dass durch die räumliche Ausgestaltung der elektrisch leitfähigen Struktur die Relativbewegung von kartenähnlichen Objekt und Eingabemittel zueinander in ein anders geformtes und verlaufendes zeitlich veränderliche Signal umgewandelt wird, indem das vom Flächensensor detektierte Signal durch die äußere Gestalt der elektrisch leitfähigen Struktur verzerrt wird.

Wenn eine elektrisch leitfähige Struktur aus identischen Streifen gleicher Länge besteht und das Eingabemittel in einer geradlinigen strichförmigen Bewegung mittig über diese vorzugsweise nebeneinander in gleicher Höhe angeordneten Streifen hinweggleitet, so wird der Flächensensor ein Signal detektieren, das im Wesentlichen dieser geradlinigen strichförmigen Bewegung entspricht und diese wiedergibt. Eine so charakterisierte, mittige Anordnung eines streifenförmigen Einzelelements wird im Sinne der Erfindung bevorzugt als Nullposition bezeichnet. Das so erhaltene Signal kann beispielsweise auf dem Display des Flächensensors dargestellt werden. Es wird bevorzugt als zeitabhängiges Signal bezeichnet, da es vorzugsweise einem Weg-Zeit-Diagramm in der Physik entspricht, mit dem der räumliche Verlauf einer Bewegung in Abhängigkeit von der Zeit dargestellt werden kann. Es ist im Sinne der Erfindung bevorzugt, dass im Wesentlichen keine Verzerrung des Signals auftritt, wenn alle beispielsweise streifenförmigen Einzelelemente der elektrisch leitfähigen Struktur in der Nullposition vorliegen. In einer bevorzugten Ausführungsform der Erfindung kann gedanklich eine virtuelle Zentrallinie konstruiert werden, die bevorzugt mittig durch die Einzelelemente verläuft und im Wesentlichen einer Schwerpunktslinie einer Ladungsträgerverteilung innerhalb der elektrisch leitfähigen Struktur entspricht.

In einer bevorzugten Ausgestaltung der Erfindung werden die Einzelelemente der elektrisch leitfähigen Struktur im Wesentlichen von Rechtecken gebildet, die im Wesentlichen parallel zueinander angeordnet vorliegen. Wenn die elektrisch leitfähige Struktur von parallel angeordneten Streifen gebildet wird, ist es im Sinne der Erfindung bevorzugt, dass die gedachte Zentrallinie im Wesentlichen senkrecht zu den Außenkanten der äußeren Streifen der elektrisch leitfähigen Struktur vorliegt.

Wenn aber einige oder alle der Streifen gegenüber der Nullposition verschoben sind, das heißt sie nicht mehr zentral um die gedachte Zentrallinie angeordnet vorliegen, kann eine Verzerrung des zeitlich veränderlichen Signals, das vom Flächensensor detektiert wird, auftreten. Wenn beispielsweise ein größerer Anteil eines streifenförmigen Einzelelements auf einer Seite A einer der Nullposition entsprechenden gedachten Zentrallinie der elektrisch leitfähigen Struktur angeordnet vorliegt, wird das zeitabhängige Signal in diese Richtung A verschoben, was im Sinne der Erfindung beispielsweise bevorzugt als Modulation, Verzerrung oder Änderung bezeichnet wird. Es ist im Sinne der Erfindung bevorzugt, dass der Grad der Verzerrung davon abhängt, wie stark ein Einzelelement gegenüber der Nullposition verschoben ist. Ein Einzelelement, das stark von der Nullposition abweicht, führt vorzugsweise zu einer starken Verzerrung des zeitabhängigen Signals, während eine schwache Abweichung von der Nullposition bevorzugt zu einer schwachen Verzerrung führt.

Wenn das Eingabemittel gleichzeitig mit mehreren Einzelelementen der elektrisch leitfähigen Struktur in Kontakt ist, überlagern sich die Verzerrungseffekte der Einzelelemente vorteilhafterweise bei der Erzeugung des zeitabhängigen Signals, so dass das erzeugte zeitabhängige Signal die räumliche Gestalt der elektrisch leitfähigen Struktur widerspiegelt, die durch die Relativbewegung von kartenähnlichem Objekt und Eingabemittel vom Flächensensor detektierbar wird. Die Umwandlung und/oder Modulation der Relativbewegung zu einem zeitabhängigen Signal auf dem Flächensensor findet vorzugsweise vor der Auswertung des Signals durch das Gerät, welches den Flächensensor beinhaltet, statt, wodurch vorteilhafterweise eine Identifikation des kartenähnlichen Objekts erreicht werden kann. Dazu kann beispielsweise das detektierte zeitabhängige Signal oder sein räumlicher Verlauf mit Daten-(sätzen) aus einer Datenbank abgeglichen werden, die entweder auf dem elektronischen Gerät, welches den Flächensensor beinhaltet, hinterlegt oder für dieses auf andere Weise zugänglich sind.

Der Begriff "im Wesentlichen" ist für den Fachmann nicht unklar, denn der Fachmann weiß, dass eine elektrisch leitfähige Struktur, die "im Wesentlichen von Rechtecken" gebildet wird, überwiegend aus Einzelelementen besteht, die rechteckig ausgestaltet sind, wobei die Struktur auch einige wenige Einzelelemente umfassen kann, die nicht rechteckig ausgestaltet sind. Diese nicht rechteckigen Einzelelemente können jede denkbare Form aufweisen, beispielsweise dreieckig, elliptisch, oval, rund, blumen-, stern-, rautenförmig oder eine Freihandform. Den Begriff "im Wesentlichen parallel" versteht der Fachmann so, dass die Einzelelemente der elektrisch leitfähigen Struktur im Rahmen der Aufbringungsgenauigkeit parallel aufgebracht werden. Wenn die Einzelelemente beispielsweise aufgedruckt werden, werden die Einzelelemente im Rahmen der Druckgenauigkeit aufgedruckt, wobei es beispielsweise zu Abweichungen von der Parallelität im Größenordnungsbereich von 0 bis 2 ° kommen kann.

In einer bevorzugten Ausführungsform der Erfindung ist es vorgesehen, dass die Einzelelemente der elektrisch leitfähigen Struktur hinsichtlich Größe, Abstand und Form so ausgebildet sind, dass das aus der Relativbewegung resultierende zeitabhängige Signal auf dem kapazitiven Flächensensor gegenüber einer Referenz-Eingabe mit dem Eingabemittel, die ohne Verwendung des kartenähnlichen Objekts erfolgt, verändert ist.

In einem weiteren Aspekt betrifft die Erfindung ein kartenähnliches Objekt, wobei das kartenähnliche Objekt eine elektrisch leitfähige Struktur aufweist, die eine Vielzahl von Einzelelementen umfasst, die auf dem kartenähnlichen Objekt angeordnet vorliegen.

In einer bevorzugten Ausgestaltung der Erfindung weisen die Einzelelemente der elektrisch leitfähigen Struktur eine Breite von 0,1 mm bis 20 mm und einen Abstand von 0,1 mm bis 30 mm auf. Durch diese bewusst ausgewählten Abmessungen der Einzelelemente wird vorteilhafterweise erreicht, dass die elektrisch leitfähige Struktur so eingerichtet sind, dass die im Wege einer Relativbewegung zwischen dem Eingabemittel und dem kartenähnlichen Objekt erzeugte Eingabe zu einem zeitabhängigen Signal umwandelbar ist, das heißt zu einem solchen moduliert werden kann, indem das Signal bewusst Verzerrungen ausgesetzt wird, die vorteilhafterweise von den Einzelelementen der leitfähigen Struktur hervorgerufen werden.

Insofern betrifft die Erfindung in einem weiteren Aspekt die Verwendung des kartenähnlichen Objekts zur Erzeugung eines zeitabhängigen Signals auf einem kapazitiven Flächensensor durch eine Relativbewegung zwischen dem Eingabemittel und dem kartenähnlichen Objekt. Die oben genannten Vorteile und überraschenden technischen Wirkungen des Verfahrens zur Erzeugung des zeitabhängigen Signals und des Identifikationsverfahrens gelten auch für das kartenähnliche Objekt und seine Verwendung. Analog gelten die Vorteile und überraschenden technischen Wirkungen des kartenähnlichen Objekts und seiner Verwendung auch für das Identifikationsverfahren und das Signalerzeugungsverfahren. Dies gilt insbesondere für die bevorzugte Ausführungsform der Erfindung, wonach die Erzeugung des zeitabhängigen Signals auf dem kapazitiven Flächensensor einen ersten Kontakt und einen zweiten Kontakt umfasst, wobei ein erster Kontakt zwischen dem kartenähnlichen Objekt und dem kapazitiven Flächensensor besteht und ein zweiter Kontakt zwischen dem kartenähnlichen Objekt und dem Eingabemittel, wobei der erste Kontakt und der zweite Kontakt gleichzeitig bestehen.

In einer bevorzugten Ausgestaltung der Erfindung sind die Einzelelemente der elektrisch leitfähigen Struktur hinsichtlich Größe, Abstand und Form so ausgebildet sind, dass das aus der Relativbewegung resultierende zeitabhängige Signal auf dem kapazitiven Flächensensor gegenüber einer Referenz-Eingabe mit dem Eingabemittel, die ohne Verwendung des kartenähnlichen Objekts erfolgt, verändert ist.

Es ist im Sinne der Erfindung insbesondere bevorzugt, dass die Einzelelemente der elektrisch leitfähigen Struktur hinsichtlich Größe, Abstand und Form so dimensioniert sind, dass zu jedem Zeitpunkt der Relativbewegung mindestens zwei Einzelelemente mindestens teilweise mit dem Eingabemittel in Wirkkontakt stehen. Das Eingabemittel kann beispielsweise ein Finger oder ein leitfähiges Objekt sein. Dabei können die mindestens zwei Einzelelemente hinsichtlich der gedachten Zentrallinie der elektrisch leitfähigen Struktur gleich oder unterschiedlich ausgerichtet sein, wobei unterschiedliche Ausrichtungen der Einzelelemente bevorzugt zu unterschiedlichen Verzerrungswirkungen auf das zeitabhängige Signal führen, während gleiche Ausrichtungen bevorzugt zu im Wesentlichen gleichen Verzerrungswirkungen führen. Bei unterschiedlichen Verzerrungswirkungen können sich diese überlagern, so dass das erzeugte Signal vorzugsweise die räumliche Struktur der elektrisch leitfähigen Struktur, insbesondere die Anordnung der Einzelelemente auf dem flächig ausgebildeten kartenähnlichen Objekt, widerspiegelt.

In einer bevorzugten Ausgestaltung der Erfindung sind die Einzelelemente der elektrisch leitfähigen Struktur hinsichtlich Größe, Abstand und Form so dimensioniert, dass zu jedem Zeitpunkt der Relativbewegung maximal ein Einzelelement mit einem Finger oder einem leitfähigen Objekt in Wirkkontakt stehen. Durch die vergrößerten Abstände zwischen den Einzelelementen wird das erzeugte zeitabhängige Signal vorzugsweise wieder zur Nullposition zurückgeführt. Diese Art der Anordnung ermöglicht bei der Auswertung des Signals eine besonders einfache und eindeutige Erkennung der Relativbewegung durch das Eingabemittel und damit vorzugsweise eine genauere Bestimmung des Signalverlaufs. Ein weiterer Vorteil dieser Ausführungsform ist die Vermeidung von Überlagerungen der Verzerrungswirkungen durch mehrere Einzelelemente und die daraus resultierende Eindeutigkeit bei der Auswertung des Signals im elektronischen Gerät, welches den Flächensensor beinhaltet.

Es ist darüber hinaus bevorzugt, dass die Eingabe mit einem Eingabemittel, beispielsweise mit einem oder mehreren Fingern oder einem elektrisch leitfähigen Objekt erfolgt, vorzugsweise in einer Bewegung relativ zum kartenähnlichen Objekt erfolgt, während das kartenähnliche Objekt relativ zum kapazitiven Flächensensor nicht bewegt wird.

Für andere Anwendungen kann es bevorzugt sein, dass die Eingabe mit einem Eingabemittel, zum Beispiel mit einem oder mehreren Fingern oder einem elektrisch leitfähigen Objekt in einer Bewegung relativ zum kartenähnlichen Objekt erfolgt, während der Finger relativ zum kapazitiven Flächensensor nicht bewegt wird und das kartenähnliche Objekt zwischen Eingabemittel und kapazitivem Flächensensor bewegt wird.

Der Verlauf des zeitabhängigen Signals kann beispielsweise wellenartig, fortlaufend, entlang einer Linie und/oder auf und ab verlaufend sein, ohne darauf beschränkt zu sein. Dabei ist es bevorzugt, dass der räumliche Verlauf im Wesentlichen der Struktur und/oder Anordnung der Einzelelemente folgt. Wenn die elektrisch leitfähige Struktur aus rechteckigen streifenförmigen Einzelelementen besteht, die im Wesentlichen parallel nebeneinander angeordnet vorliegen, beispielsweise wie ein Zebrastreifen, so bilden die kürzeren Seiten der Streifen eine von den Lücken zwischen den Streifen unterbrochene Außenlinie der elektrisch leitfähigen Struktur. Diese kann, wie bei einem Zebrastreifen, eine gerade Linie sein, wenn alle Einzelelemente die gleiche Anfangsposition und/oder Endposition haben. Wenn alle Einzelelemente auch dieselbe Länge aufweisen, ergibt sich vorzugsweise eine rechteckige elektrisch leitfähige Struktur mit im Wesentlichen parallelen Außenlinien.

Wenn die rechteckigen Streifen, die die Einzelelemente bilden, keine gleiche Anfangs- und Endposition und/oder unterschiedliche Längen aufweisen, können die Außenlinien beispielsweise gewellt ausgestaltet sein. Es ist im Sinne der Erfindung bevorzugt, dass das erzeugte zeitabhängige Signal insbesondere den Verlauf dieser Außenlinien, beziehungsweise deren Überlagerung widerspiegelt, wobei der räumliche Verlauf des zeitabhängigen Signals beispielsweise auf einem Display des Flächensensors sichtbar gemacht werden kann. Es kann für einige Anwendungen der Erfindung bevorzugt sein, dass der Verlauf des zeitabhängigen Signals abschnittsweise nicht abgelenkt ist und der Bewegung des Eingabemittels auf dem kartenähnlichen Objekt folgt. Solche Anwendungen sind beispielweise kartenähnliche Objekte, die mehrere Bereiche der elektrisch leitfähigen Struktur aufweisen. Jeder Bereich ist beispielsweise einer anderen Aktion auf dem elektronischen Gerät zugeordnet. Es ist bevorzugt, dass das zeitabhängige Signal zur eindeutigen Erkennung der einzelnen Bereiche zwischen den einzelnen Bereichen abschnittsweise nicht abgelenkt ist. Durch solche Abschnitte ohne Unterbrechung kann vorteilhafterweise auch die absolute Position des jeweiligen Abschnittes auf dem kartenähnlichen Objekt bestimmt werden.

Es ist im Sinne der Erfindung insbesondere bevorzugt, dass die gleichzeitigen Wirkkontakte zwischen Eingabemittel und kartenähnlichen Objekt und kartenähnlichen Objekt und Flächensensor kapazitiv ausgebildet sind. Es kann auch bevorzugt sein, dass der Wirkkontakt zwischen Eingabemittel und kartenähnlichem Objekt eine galvanische Verbindung darstellt. Ein kapazitiver Wirkkontakt hat den Vorteil, dass es zwischen Eingabemittel und der elektrisch leitfähigen Struktur keine galvanische Verbindung geben muss, das heißt die elektrisch leitfähige Struktur kann zum Beispiel mittels eines Lacks, einer Farbschicht, einer überdruckten Grafik, eines Labels beziehungsweise Aufklebers und/oder einer anderen weiteren Schicht abgedeckt sein. Damit ist es möglich, die elektrisch leitfähige Schicht optisch abzudecken und die Oberfläche der des kartenähnlichen Objekts unabhängig von der leitfähigen Struktur ansprechend zu gestalten. Darüber hinaus kann die elektrisch leitfähige Schicht vorteilhafterweise vor mechanischem Abrieb geschützt werden und eine zuverlässigere Funktion bei längerer Benutzung gewährleistet werden.

Darüber hinaus kann die elektrisch leitfähige Struktur mittels Folientransferverfahren, zum Beispiel Kaltfolientransfer, Heißprägen und/oder Thermotransfer auf ein vorzugsweise flexibles Substratmaterial des kartenähnlichen Objekts aufgetragen werden, ohne auf diese Aufbringungsverfahren beschränkt zu sein. Insbesondere können dazu Druckverfahren, wie zum Beispiel Offsetdruck, Tiefdruck, Flexodruck und/oder Siebdruck verwendet werden und/oder Inkjetmethoden mittels elektrisch leitfähiger Farben, die beispielsweise auf Metallpartikeln, Nanopartikeln, Kohlenstoff, Graphen und/oder elektrisch leitfähigen Polymeren basieren, ohne auf diese Druckverfahren und/oder Materialien beschränkt zu sein. Es kann im Sinne der Erfindung auch bevorzugt sein, die elektrisch leitfähige Struktur durch mindestens eine weitere Schicht abzudecken, wobei diese Schicht ein papier- oder folienbasiertes Laminatmaterial oder mindestens eine Lack-/Farbschicht sein kann. Diese Schicht kann optisch transparent oder opak ausgebildet sein.

Es war völlig überraschend, dass sich die elektrisch leitfähige Struktur aufgrund ihrer bevorzugten Struktur aus im Wesentlichen ähnlichen Einzelelementen besonders einfach individualisieren lässt.

Ein Merkmal klassischer konventioneller Druckverfahren ist die einfache und schnelle Vervielfältigung eines Motivs, indem das zu druckende Motiv auf eine Druckform, zum Beispiel Tiefdruckzylinder oder Offsetdruckplatte, aufgebracht wird und anschließend mehrfach und mit hoher Geschwindigkeit vervielfältigt werden kann. Konventionelle Druckverfahren sind nicht dafür geeignet, individualisierte Inhalte herzustellen, da die Druckformherstellung einen signifikanten Anteil an den Gesamtherstellungskosten darstellt. Somit können nur größere Auflagen eines Druckprodukts wirtschaftlich hergestellt werden. Im grafischen Druck existieren für diesen Zweck Digitaldruckverfahren, mit denen individuelle Inhalte wirtschaftlich gedruckt werden können. Diese Druckverfahren umfassen beispielsweise Elektrofotografie, Laserdruck oder Inkjetdruck. Zum aktuellen Zeitpunkt ist es nicht möglich, elektrisch leitfähige Elemente mit solchen Digitaldruckverfahren wirtschaftlich herzustellen. Es ist jedoch möglich, mittels Verfahrenskombinationen von konventionellen Druckverfahren und additiven oder subtraktiven Verfahren individualisierte elektrische leitfähige Strukturen herzustellen. Im Folgenden werden zwei mögliche Herstellungsabläufe skizziert.

Laserablation:

Im ersten Schritt wird mittels elektrischer leitfähiger Farbe oder durch Folientransferverfahren eine elektrisch leitfähige Grundstruktur auf ein beispielsweise flexibles Substrat aufgetragen. Die Grundstruktur besteht beispielsweise aus gleichförmigen äquidistanten Einzelelementen, zum Beispiel Rechtecken. In einem zweiten Prozessschritt werden die elektrisch leitfähigen Einzelelemente an bestimmten Stellen mittels Laserablation galvanisch voneinander getrennt, das heißt an diesen Stellen wird das elektrisch leitfähige Material selektiv abgetragen. Damit können einzigartige, d.h. individualisierte, Strukturen effizient hergestellt werden. Ein überraschender Vorteil dieses Herstellungsverfahren ist die gute Versteckbarkeit der elektrisch leitfähigen Struktur. Auch nach Überdrucken oder Abdecken der elektrisch leitfähigen Struktur mittels Laminat oder Label kann bei Gegenlicht gegebenenfalls die elektrisch leitfähige Struktur für das menschliche Auge sichtbar sein. Ist die Struktur über die gesamte Fläche verteilt und nur an bestimmten Stellen durch einen dünnen Laserschnitt getrennt, ist diese Struktur wesentlich schwieriger mit dem bloßen Auge zu erkennen.

Demgemäß betrifft die Erfindung in einer weiteren bevorzugten Ausgestaltung ein kartenähnliches Objekt, wobei die elektrisch leitfähige Struktur in einem mehrstufigen Prozess umfassend folgende Schritte hergestellt wird:

a) Applikation einer elektrisch leitfähigen Grundstruktur mittels Folientransferverfahren oder elektrisch leitfähiger Farbe auf ein Substrat,

b) Selektive Entfernung von Teilen der elektrisch leitfähigen Grundstruktur mittels Laser, wodurch eine elektrisch leitfähige Struktur mit Einzelelementen erhalten wird, die räumlich voneinander getrennte Bereiche aufweisen.

Der Begriff "mittels Laser" bedeutet im Sinne der Erfindung bevorzugt, dass Laserstrahlung verwendet wird, um an ausgewählten Stellen der zuvor applizierten elektrisch leitfähigen Grundstruktur elektrisch leitfähiges Material abzutragen. Dadurch bilden sich in den zuvor durchgehend elektrisch leitfähig ausgebildeten Einzelelementen der Grundstruktur Unterbrechungen aus, die vorteilhafterweise eine galvanische Verbindung zwischen zwei Unterbereichen eines Einzelelements unterbrechen, wodurch beispielsweise die Länge eines Einzelelementes eingestellt werden kann. Dadurch kann eine elektrisch leitfähige Struktur mit Einzelelementen erzeugt werden, wobei die Einzelelemente der elektrisch leitfähigen Struktur räumlich voneinander getrennte Bereiche aufweisen. Vorteilhafterweise kann dadurch auch der Bereich eines Einzelelements eingestellt werden, der im Falle einer Relativbewegung zwischen Eingabemittel und kartenähnlichem Objekt vom Flächensensor detektiert werden kann. Es ist im Sinne der Erfindung bevorzugt, dass das Substrat flexibel ausgebildet ist. Es kann sich beispielsweise um eine Plastik-, Kartonund/oder Papierkarte, die so dünn ausgebildet ist, dass sie biegsam ist und besonders einfach innerhalb einer Druckmaschine verarbeitet, d.h. bedruckt werden kann. Es ist insbesondere bevorzugt, dass eine solche Karte in einem bevorzugten Größenordnungsbereich einer Visiten- oder Checkkarte liegt.

Inkjetdruck:

Eine weitere Möglichkeit zur nachträglichen Individualisierung der elektrisch leitfähigen Struktur ist die nachträgliche Applikation von elektrisch leitfähigen Brücken. Im ersten Schritt wird mittels elektrischer leitfähiger Farbe oder durch Folientransferverfahren eine elektrisch leitfähige Grundstruktur auf ein beispielsweise flexibles Substrat aufgetragen. Die Grundstruktur besteht bevorzugt aus äquidistanten Einzelelementen, zum Beispiel Rechtecken, die an bestimmten Stellen Unterbrechungen aufweisen. In einem zweiten Prozessschritt werden diese Unterbrechungen selektiv mittels elektrisch leitfähiger Farbe bedruckt und somit miteinander verbunden. Auch mit diesem Prozess können einzigartige, d.h. individualisierte, elektrisch leitfähige Strukturen effizient hergestellt werden.

Demgemäß betrifft die Erfindung in einer weiteren bevorzugten Ausgestaltung ein kartenähnliches Objekt, wobei die elektrisch leitfähige Struktur in einem mehrstufigen Prozess umfassend folgende Schritte hergestellt wird:

a) Applikation einer elektrisch leitfähigen Grundstruktur mittels Folientransferverfahren oder elektrisch leitfähiger Farbe auf ein Substrat,

b) Selektive Applikation von elektrisch leitfähigen Brücken und/oder zusätzlichen elektrisch leitfähigen Elementen mittels Inkjetdruck, mit dem elektrisch leitfähige Farbe auf das kartenähnliche Objekt aufgebracht wird, wodurch eine elektrisch leitfähige Struktur mit Einzelelementen erhalten wird.

Der Begriff "Substrat" wird in dieser bevorzugten Ausführungsform der Erfindung bevorzugt so verstanden, wie in der zuvor beschriebenen Ausgestaltung der Erfindung. In der vorliegenden Ausführungsform der Erfindung ist es insbesondere bevorzugt, dass die elektrisch leitfähige Grundstruktur Einzelelemente umfasst, die Unterbrechungen aufweisen. Diese Unterbrechungen sind im Sinne der Erfindung bevorzugt Lücken innerhalb eines Einzelelements, wobei jedes Einzelelement bevorzugt eine oder mehrere Unterbrechung aufweist. Es ist insbesondere bevorzugt, dass diese Unterbrechungen eine galvanische Verbindung innerhalb des jeweiligen Einzelelements unterbrechen. Eine elektrisch leitfähige Brücke ist im Sinne der Erfindung bevorzugt elektrisch leitfähiges Objekt, das eine Unterbrechung überwindet in dem Sinne, dass es eine galvanische Verbindung zwischen den zuvor durch eine Unterbrechung getrennten Bereichen eines Einzelelementes herstellt. Eine solche elektrisch leitfähige Brücke wird dadurch erzeugt, dass elektrisch leitfähige Farbe mittels Inkjetdruck auf das kartenähnliche Objekt aufgebracht wird, wodurch vorteilhafterweise eine elektrisch leitfähige Struktur mit Einzelelementen erhalten wird, bei der Unterbrechungen der zuvor applizierten Grundstruktur durch die Brücken überwunden werden und eine zuvor nicht bestehende galvanische Verbindung zwischen zwei Unterbereichen eines Einzelelementes hergestellt werden kann.

In einer weiteren Ausführungsform umfasst die elektrisch leitfähige Grundstruktur Einzelelemente. Es ist bevorzugt, dass diese Einzelelemente mittels Inkjetdruck in eine oder beide Richtungen verlängert werden, indem zusätzliches elektrisch leitfähiges Material angrenzend und mindestens 0,2 mm mit dem jeweiligen Einzelelement überlappend gedruckt wird. Durch die Applikation solcher zusätzlichen elektrisch leitfähigen Elemente kann die elektrisch leitfähige Grundstruktur besonders unkompliziert verändert werden.

Es ist im Sinne der Erfindung bevorzugt, die nachträgliche Bearbeitung von zunächst erzeugten elektrisch leitfähigen Grundstrukturen als "Individualisieren" zu bezeichnen. Damit ist vorzugsweise gemeint, dass kartenähnliche Objekte erzeugt werden können, die jeweils eine unterschiedliche elektrisch leitfähige Struktur aufweisen, wobei dieser Unterschied vorzugsweise von einem Flächensensor erkannt werden kann, so dass den unterschiedlichen kartenähnlichen Objekten beispielsweise unterschiedliche Daten(sätze) und/oder Aktionen in einem elektronischen Gerät, das einen Flächensensor aufweist, zugeordnet werden können. Es war vollkommen überraschend, dass durch diese Nachbearbeitungsprozesse das besonders schnelle, kostengünstige und einfache Individualisieren von kartenähnlichen Objekten ermöglicht wird, das zuvor in einem wirtschaftlichen Verfahren nicht möglich war.

Die Erfindung wird anhand der nachfolgenden Figuren näher beschrieben:

Figuren 1 bis 3          verschiedene bevorzugte Designvarianten für eine bevorzugte Ausführungsform der elektrisch leitfähigen Struktur

Figuren 4 bis 15          Anwendungsmöglichkeiten von verschiedenen bevorzugten Ausführungsformen der Erfindung

Figur 16          bevorzugte Ausführungsform des kartenähnlichen Objektes

Figuren 17 und 18          beispielhafte Verfahren zur Individualisierung eines kartenähnlichen Objekts

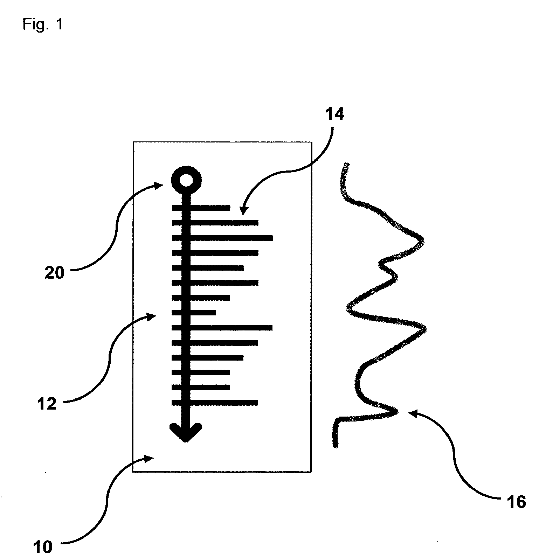

Die Figuren 1 bis 3 zeigen verschiedene Designvarianten für die elektrisch leitfähige Struktur (12) einer bevorzugten Ausführungsform des kartenähnlichen Objekts (10). Die in den Figuren 1 bis 3 dargestellten bevorzugten Ausführungsformen weisen jeweils streifenförmige, parallel zueinander angeordnete Einzelelemente (14) auf, die sich insbesondere hinsichtlich der Lage einer "Bedienspur" und der Varianz der Länge der Einzelelemente (14) unterscheiden. Der Begriff der "Bedienspur" bezeichnet im Sinne der Erfindung bevorzugt, den pfadförmigen Bereich der leitfähigen Struktur (12), der mit einem Eingabemittel (18) berührt werden soll, entweder durch eine Bewegung des kartenähnlichen Objekts (10) oder durch eine Bewegung eines Eingabemittels (18), wobei bevorzugt beide Bewegungsweisen eine Relativbewegung (20) des Eingabemittels (18) zum Objekt (10) bewirken. In den Figuren 1 bis 3 ist jeweils auf der rechten Seite der Figur eine mögliche graphische Wiedergabe des räumlichen Verlaufs des zeitabhängigen Signals (16) dargestellt. Deutlich zu sehen ist, dass dieser Verlauf in der Figur 1 den Verlauf der Außenlinie der elektrisch leitfähigen Struktur (12) widerspiegelt, das heißt der gewellten äußeren Form auf der rechten Seite der elektrisch leitfähigen Struktur (12) auf dem kartenähnlichen Objekt (10). Bei der in Figur 1 abgebildeten bevorzugten Ausführungsform der elektrisch leitfähigen Struktur (12) wird vorteilhafterweise das Konzept der Amplitudenmodulation umgesetzt, bei dem die Länge der Einzelelemente (14) in direktem Zusammenhang mit dem Signalverlauf steht.

Der räumliche Verlauf des zeitabhängigen Signals (16) entspricht im Fall der Figur 1 insbesondere deshalb dem Verlauf der Außenlinie der elektrisch leitfähigen Struktur (12), da die streifenförmigen Einzelelemente (14) auf der linken Seite der Figur eine einheitliche Anfangsposition einnehmen, so dass die linke Außenlinie der elektrisch leitfähigen Struktur (12) in Figur 1 von einer geraden, strichförmigen Außenlinie gebildet wird. Der Pfeil in den Figuren markiert den Verlauf einer Relativbewegung (20), die bevorzugt dadurch führt, dass ein Eingabemittel (18) über eine elektrisch leitfähige Struktur (12) geführt oder bewegt wird. Vorzugsweise markiert der Kreis den Anfangspunkt der Bewegung und die Pfeilspitze ein mögliches Ende der Bewegung, sowie die Richtung, in der die Bewegung des Eingabemittels (18) erfolgt, ohne darauf beschränkt zu sein. Figur 1 zeigt auch, dass der räumliche Verlauf des zeitlich veränderlichen Signals (16) eine Überlagerung aus den einzelnen Signalen darstellt, die jedes Einzelelement (14) der elektrisch leitfähigen Struktur (12) auf dem Flächensensor (22) hervorruft. Der Grad dieser Überlagerung kann vorteilhafterweise bei der Auswertung des vom Flächensensor (22) detektierten Signals eingestellt werden und ist insofern veränderlich. Er hängt insbesondere auch vom Abstand der Einzelelemente (14) der elektrisch leitfähigen Struktur (12) untereinander, sowie von der Größe des Eingabemittels (18) ab.

Figur 1 zeigt insbesondere ein kartenähnliches Objekt (10) mit einer elektrisch leitfähigen Struktur (12), die durch unterschiedlich lange, äquidistant angeordnete Einzelelemente (14) gekennzeichnet ist. Die vorgesehene "Bedienspur" für die Relativbewegung (20) zwischen Eingabemittel (18) und kartenähnlichem Objekt (10) liegt außermittig am Rand der elektrisch leitfähigen Struktur (12). Das resultierende zeitabhängige Signal (16) entsteht in dieser bevorzugten Ausgestaltung der Erfindung vorzugsweise neben der Bedienspur.

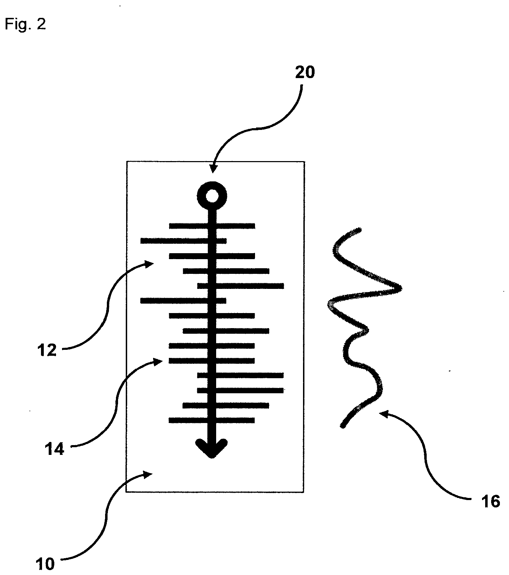

Figur 2 zeigt ein kartenähnliches Objekt (10) mit einer elektrisch leitfähigen Struktur (12), die durch gleich lange, äquidistante Einzelelemente (14) gekennzeichnet ist. Die vorgesehene "Bedienspur" für die Relativbewegung (20) zwischen Eingabemittel (18) und kartenähnlichem Objekt (10) liegt in der Mitte der elektrisch leitfähigen Struktur (12). Das resultierende zeitabhängige Signal (16) entsteht in dieser bevorzugten Ausgestaltung der Erfindung vorzugsweise beidseitig der Bedienspur.

Bei dieser bevorzugten Ausführungsform der elektrisch leitfähigen Struktur (12) stellt der Verlauf des zeitlich veränderlichen Signals (16) eine Überlagerung der Signale dar, die sowohl auf die Bestandteile der Einzelelemente (14), die sowohl rechts, als auch links von der Bedienspur angeordnet vorliegen, zurückgehen. Dies vorzugsweise deswegen, weil die streifenförmigen Einzelelemente (14) keine gemeinsame Anfangs- und Endposition aufweisen und in Bezug auf die Bedienspur statistisch verteilt vorliegen. Dies bedeutet im Sinne der Erfindung bevorzugt, dass einige Einzelelemente (14) mit einem größeren Anteil auf der rechten Seite vorliegen und andere Einzelelemente (14) mit einem größeren Anteil auf der linken Seite der Bedienspur vorliegen. Das zeitabhängige Signal (16) setzt sich vorzugsweise aus den Gesamtsignalen aller Einzelelemente (14) zusammen, wobei jeweils die Lage und Position des gesamten Einzelelementes in Bezug auf die Bedienspur bei der Erzeugung des zeitabhängigen Signals (16) beziehungsweise bei der Auswertung dieses Signals (16) zur Identifikation eines kartenähnlichen Objekts (10) berücksichtigt wird.

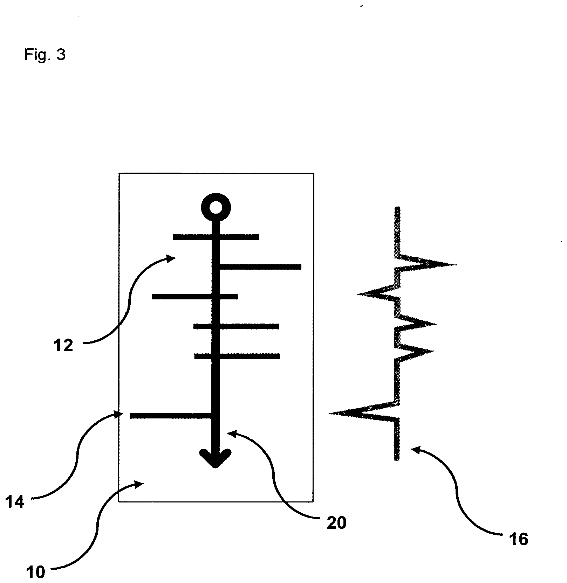

Figur 3 zeigt ein kartenähnliches Objekt (10) mit einer elektrisch leitfähigen Struktur (12), die durch gleich lange Einzelelemente (14) gekennzeichnet ist, die nicht in einem gleichen Abstand untereinander angeordnet sind. Die vorgesehene "Bedienspur" für die Relativbewegung (20) zwischen Eingabemittel (18) und kartenähnlichen Objekt (10) liegt in der Mitte der elektrisch leitfähigen Struktur (12). Das resultierende zeitabhängige Signal (16) entsteht in dieser bevorzugten Ausgestaltung der Erfindung vorzugsweise beidseitig der Bedienspur. Durch die vergrößerten Abstände zwischen den Einzelelementen (14) wird das zeitabhängige Signal (16) immer wieder zur Nullposition zurückgeführt. Bei dieser bevorzugten Anordnung der Einzelelemente (14) kann insbesondere eine besonders einfache Erkennung der Bedienspur, beispielsweise durch eine Auswertesoftware, ermöglicht werden. Bei dieser bevorzugten Ausführungsform der Erfindung werden vorzugsweise die Konzepte der Amplituden- und Frequenzmodulation kombiniert. Die Amplitude des resultierenden Signals (16) ergibt sich vorzugsweise aus den Längen der Einzelelemente (14). Die Frequenz des Signals (16) ergibt sich bevorzugt aus den Abständen zwischen den Einzelelementen (14). Es ist selbstverständlich auch möglich, die in den Figuren 1 bis 3 dargestellten bevorzugten Ausführungsformen der elektrisch leitfähigen Strukturen (12) miteinander zu kombinieren.

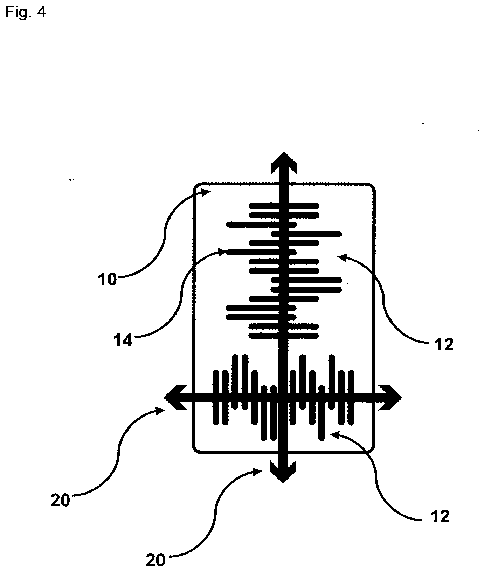

Die Figuren 4 bis 15 zeigen Anwendungsmöglichkeiten von verschiedenen bevorzugten Ausführungsformen der Erfindung. Figur 4 zeigt ein kartenähnliches Objekt (10), auf dem zwei unabhängige elektrisch leitfähige Strukturen (12) angeordnet sind. Diese beiden elektrisch leitfähigen Strukturen (12) weisen jeweils eigene Bedienpfade auf, die in diesem Ausführungsbeispiel einmal vertikal und einmal horizontal verlaufen. Damit ergeben sich insgesamt vier Interaktionsrichtungen: von oben nach unten, von unten nach oben, von links nach rechts und von rechts nach links. Jede elektrisch leitfähige Struktur (12) kann in Abhängigkeit der Richtung der Relativbewegung (20) unterschiedliche Aktionen auf dem Gerät, welches den kapazitiven Flächensensor (20) beinhaltet, auslösen.

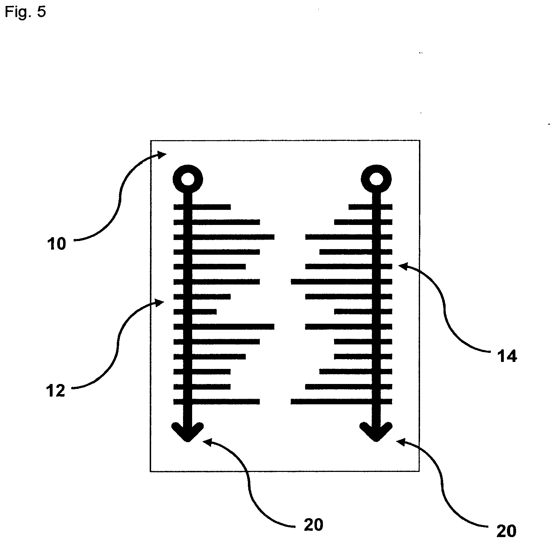

Figur 5 zeigt ebenfalls ein kartenähnliches Objekt (10), auf dem zwei unabhängige elektrisch leitfähige Strukturen (12) angeordnet sind. Diese beiden elektrisch leitfähigen Strukturen (12) weisen jeweils eigene Bedienpfade auf, die an verschiedenen Positionen auf dem kartenähnlichen Objekt (10) angeordnet vorliegen. Somit kann ein kartenähnliches Objekt (10) in Abhängigkeit des gewählten Bewegungspfades unterschiedliche Aktionen auf dem Gerät, welches den kapazitiven Flächensensor (20) beinhaltet, auslösen.

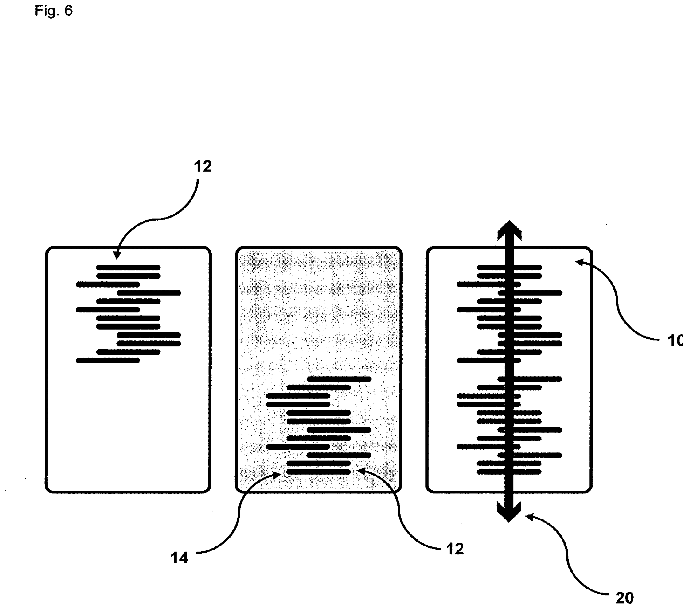

Figur 6 zeigt zwei elektrisch leitfähige Strukturen (12), eine auf der Vorderseite des kartenähnlichen Objektes (10) (in der Abbildung links dargestellt) und eine auf der Rückseite des kartenähnlichen Objektes (10) (in der mittigen Abbildung dargestellt). Damit können zum Beispiel wie bei klassischen Kartenspielen gleiche Rückseiten im gesamten Spiel mit unterschiedlichen Vorderseiten kombiniert werden. Beide elektrisch leitfähige Strukturen (12) bewirken die Erzeugung eines zusammengesetzten Signals (16) auf dem kapazitiven Flächensensor (22) bei Relativbewegung (20) eines Eingabemittels (18) entlang des Bewegungspfades auf dem kartenähnlichen Objekt (10).

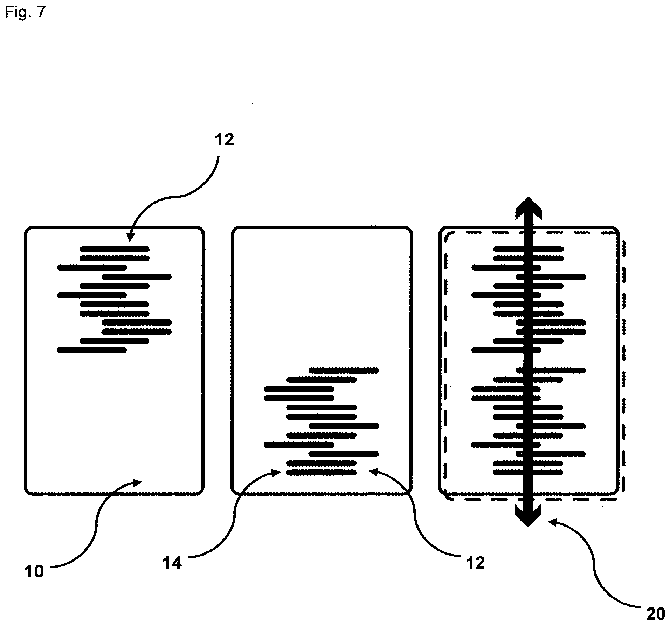

Figur 7 zeigt einen ähnlichen Ansatz wie Figur 6. Hier sind zwei verschiedene elektrisch leitfähige Strukturen (12) auf zwei verschiedenen Karten (10) angeordnet. Diese werden zum Auslesen übereinander auf den kapazitiven Flächensensor (22) gelegt und sind nacheinander in Wirkkontakt, wenn das Eingabemittel (18) auf dem Stapel aus kartenähnlichen Objekten (10) entlang des Bewegungspfades relativ zu den Karten (10) bewegt wird.

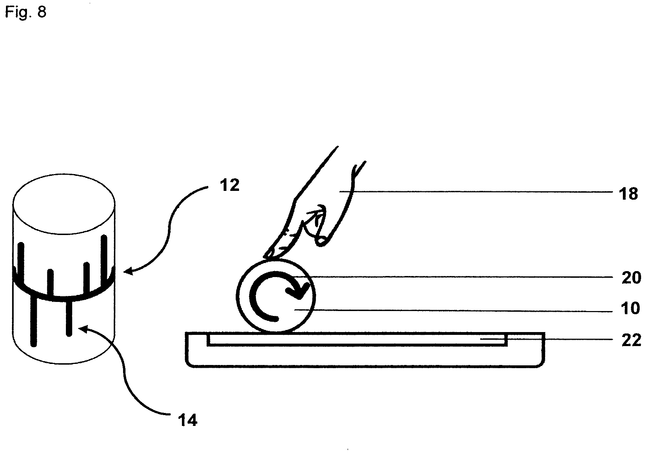

Figur 8 zeigt die Anordnung der elektrisch leitfähigen Struktur (12) auf einem Zylinder, wobei ein kartenähnliches Objekt (10) mit einer elektrisch leitfähigen Struktur (12) beispielsweise auf einer Außenseite des Zylinders angeordnet vorliegen kann. Das kartenähnliche Objekt (10) kann auch in Form eines Aufklebers oder eines Labels vorliegen, das an einem vorzugsweise dreidimensionalen Objekt angebracht werden kann. In dieser bevorzugten Ausführungsform der Erfindung sind die Einzelelemente (14) über einen umlaufenden Hauptstrang miteinander verbunden. Der Benutzer berührt den Zylinder im Bereich des Hauptstranges und bewegt den Zylinder rollend über den kapazitiven Flächensensor (22). Die Anordnung der Einzelelemente (14), die zum jeweiligen Zeitpunkt mit dem kapazitiven Flächensensor (22) in Wirkkontakt stehen, erzeugen bevorzugt ein Signal (16) auf dem kapazitiven Flächensensor (22).

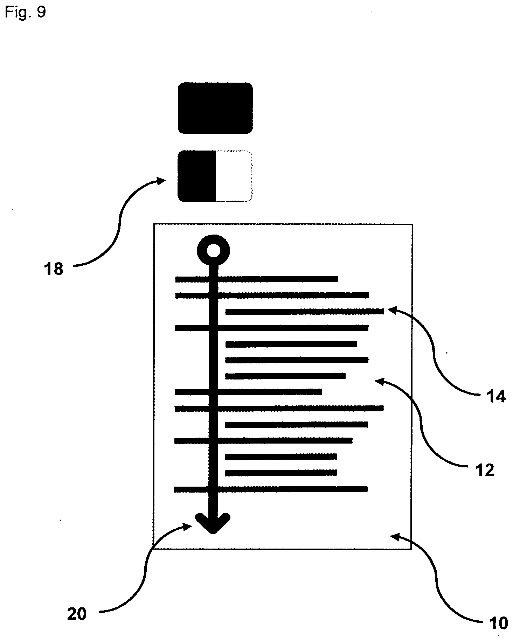

Figur 9 zeigt ein kartenähnliches Objekt (10), auf dem eine elektrisch leitfähige Struktur (12) angeordnet ist, die einen Bedienpfad aufweist. Die Eingabe erfolgt bevorzugt durch eine Relativbewegung (20) des Eingabemittels (18) entlang dieses Bedienpfades. Es sind insbesondere zwei verschiedene Ausgestaltungsformen des Eingabemittels (18) dargestellt. Je nach Ausgestaltung des Eingabemittels (18) werden unterschiedliche Signale (16) auf dem kapazitiven Flächensensor (22) erzeugt. Das Rechteck mit abgerundeten Ecken stellt in Figur 9 jeweils das Eingabemittel (18) dar. Der elektrisch leitfähige Bereich ist schwarz dargestellt. Das oben dargestellte bevorzugte Eingabemittel ist vollflächig elektrisch leitfähig ausgebildet; das darunter dargestellte Eingabemittel ist beispielhaft nur auf der linken Hälfte elektrisch leitfähig ausgebildet. Jedes Eingabemittel (18) erzeugt somit ein anderes Signal bei Relativbewegung (20) über das gleiche kartenähnliche Objekt (10) auf dem kapazitiven Flächensensor (22) und kann damit unterschiedliche Aktionen auf dem Gerät, welches den kapazitiven Flächensensor (22) beinhaltet, auslösen. Eine mögliche Anwendung ist die Unterscheidung von Nutzern, Spielern oder Anwendern.

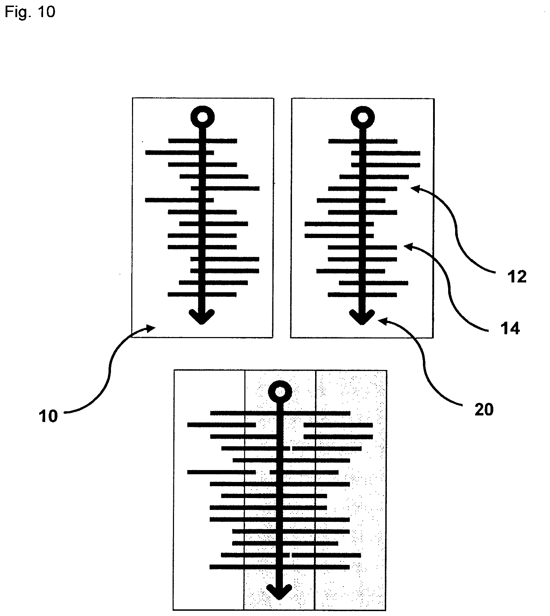

Figur 10 zeigt zwei unterschiedliche kartenähnliche Objekte (10). Insbesondere unterscheiden sich die kartenähnlichen Objekte durch die Ausgestaltung ihrer elektrisch leitfähigen Strukturen (12). Hier sind zwei verschiedene elektrisch leitfähige Strukturen (12) auf zwei verschiedenen Karten (10) angeordnet. Diese werden zum Auslesen zur Hälfte überlappend auf den kapazitiven Flächensensor (22) gelegt und sind somit gleichzeitig in Wirkkontakt bei Relativbewegung (20) des Eingabemittels (18) auf dem Stapel aus kartenähnlichen Objektes (10) entlang des Bewegungspfades. Jede der drei elektrisch leitfähigen Strukturen (12) - die der ersten Karte, die der zweiten Karte und die der Kombination aus beiden Karten - kann unterschiedliche Aktionen auf dem Gerät, welches den kapazitiven Flächensensor (22) beinhaltet, auslösen.

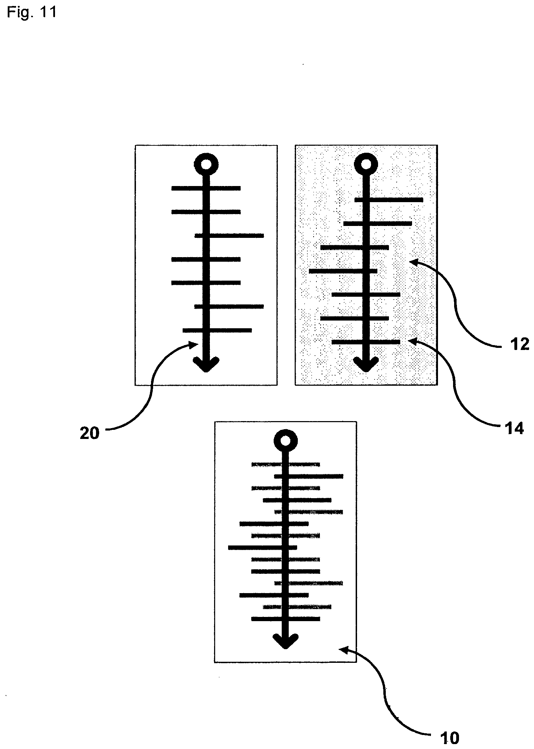

Figur 11 zeigt zwei unterschiedliche kartenähnliche Objekte (10). In dieser bevorzugten Ausführungsform der Erfindung sind zwei verschiedene elektrisch leitfähige Strukturen (12) auf zwei verschiedenen Karten (10) angeordnet. Diese werden zum Auslesen übereinander auf den kapazitiven Flächensensor (22) gelegt und sind somit bevorzugt gleichzeitig in Wirkkontakt bei Relativbewegung (20) des Eingabemittels (18) auf dem Stapel aus kartenähnlichen Objekten (10) entlang des Bewegungspfades. Die elektrisch leitfähigen Strukturen (12) auf den beiden Karten (10) sind zueinander versetzt und können einander überlagern, wenn die Karten (10) übereinander liegen. Jede der drei elektrisch leitfähigen Strukturen (12) - die der ersten Karte, die der zweiten Karte und die der Kombination aus beiden Karten - kann unterschiedliche Aktionen auf dem Gerät, welches den kapazitiven Flächensensor (22) beinhaltet, auslösen.

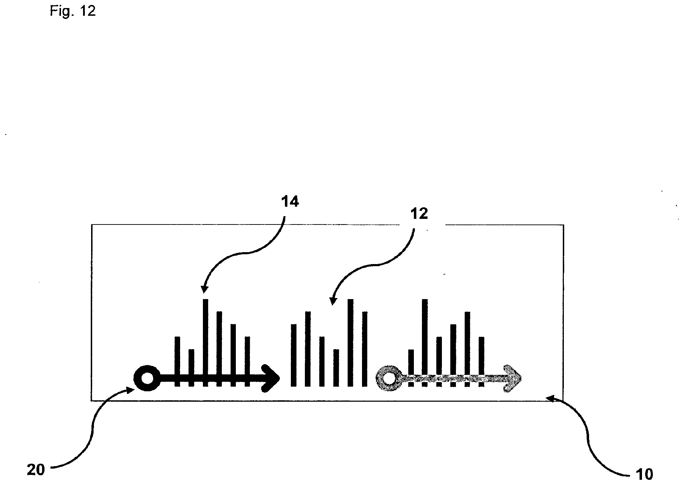

Figur 12 zeigt ein kartenähnliches Objekt (10), auf dem mehrere elektrisch leitfähige Strukturen (12) angeordnet sind. Das kartenähnliche Objekt (10) wird zum Auslesen auf den kapazitiven Flächensensor (22) gelegt. Je nach gewählter Position des Bewegungspfades bei Relativbewegung (20) des Eingabemittels (18) auf dem kartenähnlichen Objekt (10) können unterschiedliche Aktionen auf dem Gerät, welches den kapazitiven Flächensensor (22) beinhaltet, ausgelöst werden. Damit ist die Eingabe einer Auswahl möglich. Eine mögliche Anwendung kann zum Beispiel die Auswahl einer Antwort und/oder Eingabe in einem Spiel oder Quiz sein.

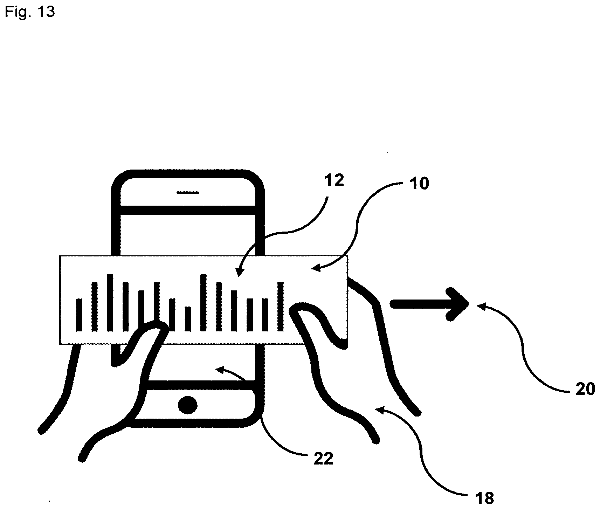

Figur 13 zeigt ein kartenähnliches Objekt (10) mit elektrisch leitfähiger Struktur (12), welches zum Auslesen über den kapazitiven Flächensensor (22) gezogen wird und dabei mit dem Eingabemittel (18), beispielsweise einem menschlichen Finger oder einem anderen Handbestandteil, berührt wird. In dieser bevorzugten Ausführungsform der Erfindung wird die Relativbewegung (20) des Eingabemittels (18) auf dem kartenähnlichen Objekt (10) durch die Bewegung des kartenähnlichen Objektes (10) verursacht, das heißt das kartenähnliche Objekt (10) wird zwischen kapazitivem Flächensensor (22) und dem Eingabemittel (18) hindurchgezogen. Der räumliche Verlauf des zeitabhängigen Signals (16) stellt in diesem Beispiel keine wellenartige Linie dar, sondern folgt einer Auf- und Abbewegung in dem Bereich, in dem das Eingabemittel (18) in räumlicher Beziehung zum Flächensensor (22) steht.

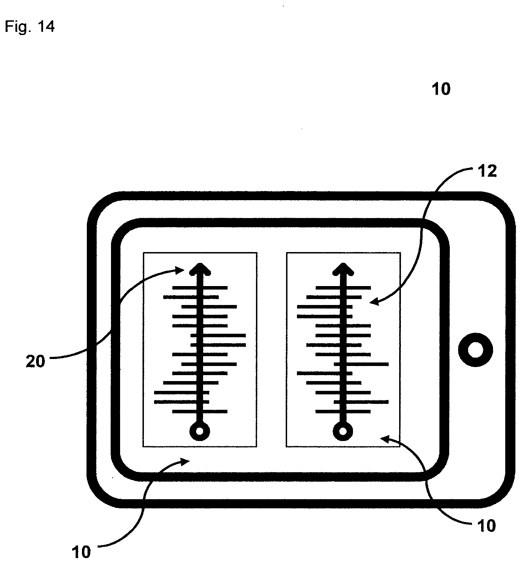

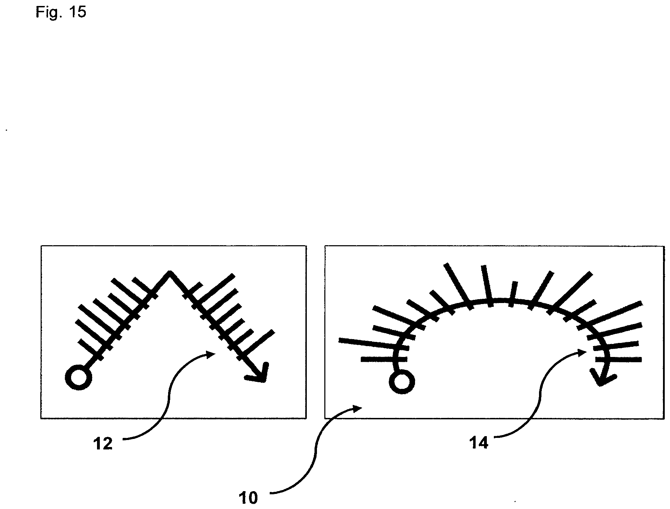

Figur 14 zeigt die gleichzeitige Verwendung von zwei kartenähnlichen Objekten (10) mit elektrisch leitfähiger Struktur (12) auf einem kapazitiven Flächensensor (22). Figuren 15 a und b zeigen kartenähnliche Objekte (10) mit elektrisch leitfähiger Struktur (12). Es sind Varianten von Bewegungspfaden oder Bedienspuren dargestellt. Bewegungspfade können in beliebiger Richtung verlaufen, die Richtung ändern und/oder gekrümmt sein.

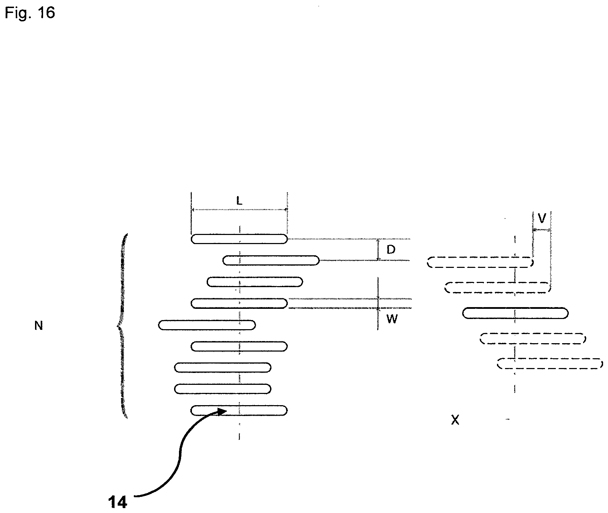

Figur 16 zeigt den Zusammenhang zwischen Design der elektrisch leitfähigen Struktur (12) des kartenähnlichen Objekts (10) und der Datenkapazität. Die in Figur 16 dargestellte bevorzugte Ausführungsform des kartenähnlichen Objektes (10) weist eine elektrisch leitfähige Struktur (12) auf, die aus im Wesentlichen gleichförmigen Einzelelementen (14) besteht. Die Form der Einzelelemente (14) kann zum Beispiel rechteckig mit abgerundeten Ecken sein. Das Design ist durch folgende Kennwerte charakterisierbar:

- Anzahl N der Einzelelemente (14)
- Breite W des Einzelelements (14)
- Länge L des Einzelelements (14)
- Abstand D zwischen den Einzelelementen (14)
- Anordnung der Einzelelemente (14) in X Stufen
- Stufenabstand V

Die Gesamtbreite $W_{ges}$ der elektrisch leitfähigen Struktur (12) ist

$$W_{ges} = L + (X - 1) * V$$

Die Gesamtlänge $L_{ges}$ der elektrisch leitfähigen Struktur (12) ist

$$L_{ges} = (N - 1) * D + W$$

Daraus ergibt sich ein Flächenbedarf $A_{ges}$ der elektrisch leitfähigen Struktur (12) von

$$A_{ges} = W_{ges} \times L_{ges}$$

Die theoretische Datenkapazität C berechnet sich nach

$$C = X^N$$

Die daraus resultierende Datendichte $C_A$ (Datenkapazität pro Fläche) ist

$$C_A = \frac{C}{A_{ges}}$$

Die folgende Tabelle gibt einen Überblick über konkrete Ausführungsbeispiele. Diese Beispiele orientieren sich an Außenabmessungen von kartenähnlichen Objekten (10), zum Beispiel Visitenkarten, Spielkarten etc. und sind auf beliebige andere Formate anwendbar.

| Beispiel | N | W/mm | L/mm | D/mm | × | V/mm | W ges / mm | L_ges / mm | A_ges / mm2 | C |
|---|---|---|---|---|---|---|---|---|---|---|
| 1 | 9 | 5 | 40 | 7 | 3 | 10 | 60 | 61 | 3.660 | 19.683 |
| 2 | 10 | 2 | 30 | 6 | 3 | 10 | 50 | 56 | 2.800 | 59.049 |
| 3 | 9 | 3 | 30 | 7 | 5 | 5 | 50 | 59 | 2.950 | 1.953.125 |
| 4 | 10 | 3 | 30 | 7 | 5 | 5 | 50 | 66 | 3.300 | 9.765.625 |
| 5 | 16 | 2 | 30 | 5 | 5 | 5 | 50 | 77 | 3.850 | 152.587.890.625 |
| 6 | 12 | 2 | variabel | 6 | 4 | 5 | 40 | 68 | 2.720 | 16.777.216 |

Zur sicheren Auswertung des Signals (16) auf dem kapazitiven Flächensensor (22) kann es von Vorteil sein zum Beispiel das erste und letzte Einzelelement (14) immer in der Nullposition anzuordnen. Dann berechnet sich die theoretische Datenkapazität C wie folgt:

$$C = X^{(N-2)}$$

Für Beispiel 3 ergeben sich damit folgende Ergebnisse:

| Beispiel | N | W/mm | L/mm | D/mm | X | V/mm | W_ges / mm | L_ges / mm | A_ges / mm2 | C |
|---|---|---|---|---|---|---|---|---|---|---|
| 3A | 9 | 3 | 30 | 7 | 5 | 5 | 50 | 59 | 2.950 | 78.125 |

Diese theoretischen Werte sind Bruttowerte. Die Nutzdaten können durch Implementierung von Prüfsummen, Redundanz oder Fehlererkennungs- und/oder - korrekturalgorithmen geringer sein.

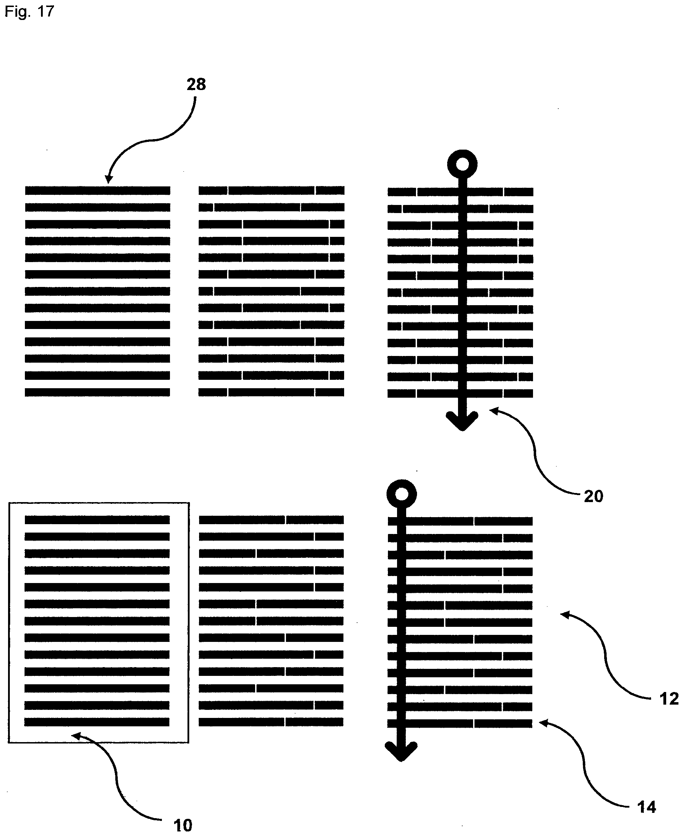

Figur 17 zeigt beispielhaft, wie eine elektrisch leitfähige Struktur (12) im Sinne der vorliegenden Erfindung auf ein kartenähnliches Objekt (10) aufgebracht werden kann. Dabei wird in einem ersten Prozessschritt (linke Abbildung) eine erste elektrisch leitfähige Struktur, die im Sinne der Erfindung bevorzugt auch als Grundstruktur (28) bezeichnet wird, auf ein Substrat, beispielsweise ein kartenähnliches Objekt (10), aufgetragen. Dies kann beispielsweise durch die Verwendung von elektrisch leitfähiger Farbe oder Folientransferverfahren geschehen. Die Grundstruktur (28) kann beispielsweise aus gleichförmigen äquidistanten Einzelelementen (14) bestehen, zum Beispiel Rechtecken. In einem zweiten Prozessschritt werden die elektrisch leitfähigen Einzelelemente (14) an bestimmten Stellen mittels Laserablation galvanisch voneinander getrennt, das heißt an diesen Stellen wird das elektrisch leitfähige Material selektiv abgetragen. Dies wird jeweils in der mittleren Abbildung von Figur 17 dargestellt. Damit können einzigartige, d.h. individualisierte, Strukturen effizient hergestellt werden. Ein überraschender Vorteil dieses Herstellungsverfahren ist die gute Versteckbarkeit der elektrisch leitfähigen Struktur (12). Auch nach Überdrucken oder Abdecken der elektrisch leitfähigen Struktur (12) mittels Laminat oder Label können elektrisch leitfähige Strukturen (12) bei herkömmlichen Herstellungs- und/oder Druckverfahren bei Gegenlicht gegebenenfalls für das menschliche Auge sichtbar bleiben. Ist die Struktur (12) über die gesamte Fläche verteilt und nur an bestimmten Stellen durch einen dünnen Laserschnitt getrennt, ist diese Struktur (12) wesentlich schwieriger mit dem bloßen Auge zu erkennen. Der Pfeil in den rechten Abbildungen zeigt eine mögliche Bedienspur auf den so, mittels Laserablation erzeugten, kartenähnlichen Objekten, wobei die Bedienspur beispielsweise mittig oder an einer Seite der elektrisch leitfähigen Struktur (12) angeordnet sein kann. Vorzugsweise wird im Bereich der geplanten Bedienspur kein elektrisch leitfähiges Material abgetragen, so dass eine Eingabe mit einem Eingabemittel (18) aufgrund der galvanischen Verbindung innerhalb des Einzelelementes (14) der elektrisch leitfähigen Struktur (12) in den Bereich eines Wirkkontakts der Struktur (12) übertragen werden kann, wo die Eingabe vom Flächensensor (22) detektierbar ist. Es ist in dieser bevorzugten Ausführungsform der Erfindung bevorzugt, dass die Relativbewegung (20) zwischen Eingabemittel (18) und kartenähnlichen Objekt (10) in dem Bereich erfolgt, in dem kein elektrisch leitfähiges Material abgetragen wird.

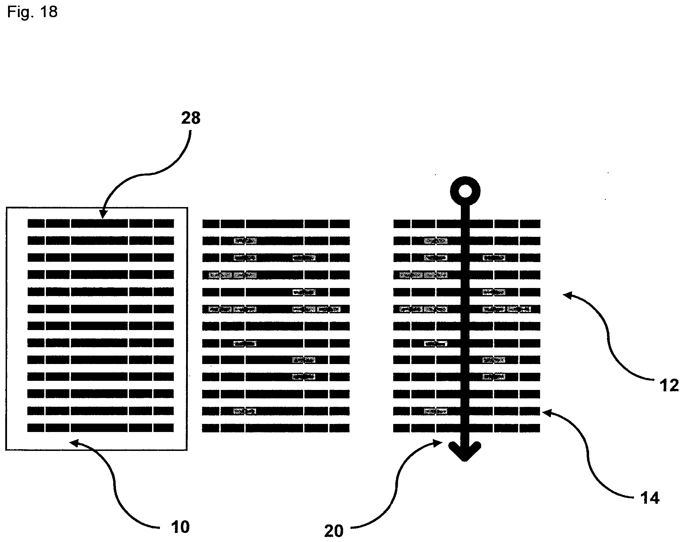

Figur 18 zeigt beispielhaft ein weiteres Verfahren zur Aufbringung einer elektrisch leitfähigen Struktur (12) auf ein kartenähnliches Objekt (10). Insbesondere ist es durch die in Figur 17 und 18 beispielhaft dargestellten Verfahren möglich, elektrisch leitfähige Strukturen (12) auf einem kartenähnlichen Objekt (10) nachträglich zu individualisieren, d.h. im Sinne der Erfindung bevorzugt, eine zunächst aufgebrachte elektrisch leitfähige Grundstruktur so zu bearbeiten, dass sich die elektrisch leitfähigen Strukturen (12) unterschiedlicher kartenähnlicher Objekte (10) voneinander unterscheiden und dieser Unterschied von einem Flächensensor (22) detektiert werden kann. Es kann im Sinne der Erfindung ebenso bevorzugt sein, mehrere auf einem kartenähnlichen Objekt (10) angeordnete elektrisch leitfähige Strukturen (12) voneinander unterscheidbar zu machen.

Bei dem in Figur 18 dargestellten Verfahren werden elektrisch leitfähige Brücken nachträglich auf dem kartenähnlichen Objekt (10) angebracht. Dazu wird in einem ersten Schritt eine elektrisch leitfähige Grundstruktur auf ein kartenähnliches Objekt (10), dem Substrat, aufgetragen. Die elektrisch leitfähige Grundstruktur wird beispielsweise durch die Verwendung elektrisch leitfähiger Farbe oder durch Folientransferverfahren auf das kartenähnliche Objekt aufgebracht. Die Grundstruktur umfasst bevorzugt äquidistante Einzelelemente (14), die zum Beispiel rechteckig und/oder streifenförmig ausgebildet sein können und die an bestimmten Stellen Unterbrechungen aufweisen. Eine mögliche bevorzugte Ausführungsform einer solchen Grundstruktur ist in der linken Abbildung der Figur 18 dargestellt. In einem zweiten Prozessschritt können die Unterbrechungen selektiv mittels elektrisch leitfähiger Farbe bedruckt werden, wodurch sie vorteilhafterweise miteinander verbunden werden, wie in der mittleren Abbildung von Figur 18 gezeigt wird. Eine mögliche Bedienspur kann in dieser bevorzugten Ausgestaltung der Erfindung bevorzugt in einem solchen Bereich der elektrisch leitfähigen Struktur (12) angeordnet sein, in dem in allen Einzelelementen (14) der elektrisch leitfähigen Struktur (12) keine Unterbrechungen vorliegen. Dies ist in der rechten Abbildung der Figur 18 dargestellt.

**Bezugszeichenliste:**

| | |
|---|---|
| 10 | kartenähnliches Objekt |
| 12 | elektrisch leitfähige Struktur |
| 14 | Einzelelemente |
| 16 | zeitabhängiges Signal |
| 18 | Eingabemittel |
| 20 | Relativbewegung |
| 22 | Flächensensor |
| 24 | erster Wirkkontakt |
| 26 | zweiter Wirkkontakt |
| 28 | elektrisch leitfähige Grundstruktur |

**Patentansprüche**

1. Verfahren zur Erzeugung eines zeitabhängigen Signals (16) auf einem kapazitiven Flächensensor (22) **dadurch gekennzeichnet, dass** ein kartenähnliches Objekt (10) eine elektrisch leitfähige Struktur (12) aufweist, die eine Vielzahl von Einzelelementen (14) umfasst, die auf dem kartenähnlichen Objekt (10) angeordnet vorliegen, wobei das zeitabhängige Signal (16) durch die Anordnung der Einzelelemente (14) auf dem kartenähnlichen Objekt (10) festgelegt und durch eine Relativbewegung (20) zwischen einem Eingabemittel (18) und dem kartenähnlichen Objekt (10) erzeugt wird.

2. Verwendung des Verfahrens nach Anspruch 1 zur Identifikation eines kartenähnlichen Objekts (10) **umfassend folgende Schritte**

   a. Bereitstellung des kartenähnlichen Objekts (10) mit einer elektrisch leitfähigen Struktur (12), die eine Vielzahl von Einzelelementen (12) umfasst,
   b. Auflegen des kartenähnlichen Objekts (10) auf einen kapazitiven Flächensensor (22), wodurch ein erster Wirkkontakt (24) zwischen dem kartenähnlichen Objekt (10) und dem kapazitiven Flächensensor (22) ausgebildet wird,
   c. Ausführen einer Relativbewegung (20) zwischen einem Eingabemittel (18) und dem kartenähnlichen Objekt (10), wodurch ein zweiter Wirkkontakt (26) zwischen dem kartenähnlichen Objekt (10) und dem Eingabemittel (18) ausgebildet wird,
   d. Erzeugung eines zeitabhängigen Signals (16) in Abhängigkeit von der Relativbewegung (20),
   e. Auswertung des zeitabhängigen Signals (16) durch das den Flächensensor (22) beinhaltende Gerät zur Identifikation des kartenähnlichen Objekts (10)

   wobei das zeitabhängige Signal (16), das auf dem kapazitiven Flächensensor (22) erzeugt wird, durch die Anordnung der Einzelelemente (14) auf dem kartenähnlichen Objekt (10) festgelegt wird.

3. Verfahren nach Anspruch 1 und/oder 2 **dadurch gekennzeichnet, dass** die Erzeugung des zeitabhängigen Signals (16) auf dem kapazitiven Flächensensor (22) und/oder die Identifikation des kartenähnlichen Objekts (10) einen ersten Wirkkontakt und einen zweiten Wirkkontakt umfasst, wobei ein erster Wirkkontakt zwischen dem kartenähnlichen Objekt (10) und dem kapazitiven Flächensensor (22) besteht und ein zweiter Wirkkontakt zwischen dem kartenähnlichen Objekt (10) und dem Eingabemittel (18), wobei mindestens der zweite Wirkkontakt dynamisch ausgebildet ist.

4. Verfahren nach Anspruch 3 **dadurch gekennzeichnet, dass** der erste Wirkkontakt und der zweite Wirkkontakt gleichzeitig bestehen und das kartenähnliche Objekt (10) zwischen Flächensensor (22) und Eingabemittel (18) angeordnet vorliegt.

5. Verfahren nach einem oder mehreren der vorhergehenden Ansprüche **dadurch gekennzeichnet, dass** das zeitabhängige Signal (16) bezüglich Position, Richtung, Form, Unterbrechung des Signals, Frequenz und/oder Signalstärke mindestens teilweise verändert ist.

6. Kartenähnliches Objekt (10) zur Erzeugung eines zeitabhängigen Signals (16) auf einem kapazitiven Flächensensor (22) wobei

   das kartenähnliche Objekt (10) eine elektrisch leitfähige Struktur (12) aufweist, die eine Vielzahl von Einzelelementen (14) umfasst, welche von Rechtecken gebildet werden und im Wesentlichen parallel zueinander auf dem kartenähnlichen Objekt (10) angeordnet vorliegen, wobei es zu Abweichungen von einer Parallelität von bis zu 2 ° kommen kann **dadurch gekennzeichnet, dass** die Einzelelemente (14) einen Abstand von 0,1 mm bis 30 mm aufweisen und wobei das zeitabhängige Signal (16) durch die Anordnung der Einzelelemente (14) auf dem kartenähnlichen Objekt (10) festgelegt und durch eine Relativbewegung (20) zwischen einem Eingabemittel (18) und dem kartenähnlichen Objekt (10) erzeugbar ist.

**7.** Kartenähnliches Objekt (10) nach Anspruch 6 **wobei**
die Einzelelemente (14) im Wesentlichen parallel mit Abweichungen von einer Parallelität von bis zu 2° zueinander entlang einer Zentrallinie angeordnet sind, wobei einige Einzelelemente (14) eine unterschiedliche Länge oder Breite, einen unterschiedlichen Abstand zueinander aufweisen oder unterschiedlich gegenüber der Zentrallinie verschoben vorliegen.

**8.** Kartenähnliches Objekt (10) nach Anspruch 6 oder 7
**dadurch gekennzeichnet, dass**
die elektrisch leitfähige Struktur (12) mindestens zwei voneinander galvanisch getrennte Einzelelemente (14) umfasst, wobei die Einzelelemente (14) in einer Ebene angeordnet vorliegen.

**9.** Kartenähnliches Objekt (10) nach einem oder mehreren der Ansprüche 6 bis 8
**dadurch gekennzeichnet, dass**
die Einzelelemente (14) der elektrisch leitfähigen Struktur (12) eine Breite von 0,1 mm bis 20 mm aufweisen.

**10.** Verfahren zur Herstellung eines kartenähnliches Objekts (10) nach einem oder mehreren der Ansprüche 6 bis 8
**dadurch gekennzeichnet, dass**
die Einzelelemente (14) der elektrisch leitfähigen Struktur (12) hinsichtlich Größe, Abstand und Form so ausgebildet sind, dass das aus der Relativbewegung (20) resultierende zeitabhängige Signal (16) auf dem kapazitiven Flächensensor (22) gegenüber einer Referenz-Eingabe mit dem Eingabemittel (18), die ohne Verwendung des kartenähnlichen Objekts (10) erfolgt, verändert ist.

**11.** Verfahren zur Herstellung eines kartenähnliches Objekts (10) nach einem oder mehreren der Ansprüche 6 bis 9
**dadurch gekennzeichnet, dass**
die elektrisch leitfähige Struktur (12) in einem mehrstufigen Prozess umfassend folgende Schritte hergestellt wird:

a) Applikation einer elektrisch leitfähigen Grundstruktur (28) mittels Folientransferverfahren oder elektrisch leitfähiger Farbe auf ein Substrat,
b) Selektive Entfernung von Teilen der elektrisch leitfähigen Grundstruktur (28) mittels Laser, wodurch eine elektrisch leitfähige Struktur (12) mit Einzelelementen (14) erhalten wird, die räumlich voneinander getrennte Bereiche aufweisen.

**12.** Verfahren zur Herstellung eines kartenähnliches Objekts (10) nach einem oder mehreren der Ansprüche 6 bis 9
**dadurch gekennzeichnet, dass**
die elektrisch leitfähige Struktur (12) in einem mehrstufigen Prozess umfassend folgende Schritte hergestellt wird:

a) Applikation einer elektrisch leitfähigen Grundstruktur (28) mittels Folientransferverfahren oder elektrisch leitfähiger Farbe auf ein Substrat,
b) Selektive Applikation von elektrisch leitfähigen Brücken und/oder zusätzlichen elektrisch leitfähigen Elementen mittels Inkjetdruck, mit dem elektrisch leitfähige Farbe auf das kartenähnliche Objekt (10) aufgebracht wird, wodurch eine elektrisch leitfähige Struktur (12) mit Einzelelementen (14) erhalten wird.

**13.** Verwendung des kartenähnlichen Objekts (10) nach einem oder mehreren der Ansprüche 6 bis 9 zur Erzeugung eines zeitabhängigen Signals (16) auf einem kapazitiven Flächensensor (22) durch eine Relativbewegung (20) zwischen dem Eingabemittel (18) und dem kartenähnlichen Objekt (10).

**14.** Verwendung nach Anspruch 13
**dadurch gekennzeichnet, dass**
die Erzeugung des zeitabhängigen Signals (16) auf dem kapazitiven Flächensensor (22) einen ersten Wirkkontakt und einen zweiten Wirkkontakt umfasst, wobei ein erster Wirkkontakt zwischen dem kartenähnlichen Objekt (10) und dem kapazitiven Flächensensor (22) besteht und ein zweiter Wirkkontakt zwischen dem kartenähnlichen Objekt (10) und dem Eingabemittel (18), wobei der erste Wirkkontakt und der zweite Wirkkontakt gleichzeitig bestehen.

**Claims**

**1.** A method for generating a time-dependent signal (16) on a capacitive surface sensor (22),
**characterized in that**

a card-like object (10) has an electrically conductive structure (12) comprising a plurality of individual elements (14), which are arranged on the card-like object (10), wherein the time-dependent signal (16) is established by the arrangement of the individual elements (14) on the card-like object (10) and generated by a relative movement (20) between an input means (18) and the card-like object (10).

2. Use of the method according to claim 1 for identifying a card-like object (10),

**comprising the steps of**

> a. providing the card-like object (10) with an electrically conductive structure (12) comprising a plurality of individual elements (14),
> b. placing the card-like object (10) on a capacitive surface sensor (22), whereby a first active contact (24) between the card-like object (10) and the capacitive surface sensor (22) is formed,
> c. performing a relative movement (20) between an input means (18) and the card-like object (10), whereby a second active contact (26) between the card-like object (10) and the input means (28) is formed,
> d. generating a time-dependent signal (16) as a function of the relative movement (20),
> e. evaluating the time-dependent signal (16) by the device including the surface sensor (22) for identifying the card-like object (10)

> wherein the time-dependent signal (16) which is generated on the capacitive surface sensor (22), is established by the arrangement of the individual elements (14) on the card-like object (10).

3. The method according to claim 1 and/or 2,
**characterized in that**
generating a time-dependent signal (16) on the capacitive surface sensor (22) and/or identifying a card-like object (10), comprises providing a first active contact (24) and a second active contact (26), wherein the first active contact (24) exists between the card-like object (10) and the capacitive surface sensor (22), and the second active contact (26) exists between the card-like object (10) and the input means (18), wherein at least the second active contact (26) is formed dynamically.

4. The method according to claim 3,
**characterized in that**
the first active contact (24) and the second active contact (26) exist simultaneously, and the card-like object (10) is arranged between the surface sensor (22) and the input means (18).

5. The method according to any one or more of the preceding claims,
**characterized in that**
the time-dependent signal (16) on the capacitive surface sensor (22) is at least partially changed with respect to position, speed, direction, shape, interruption of the signal, frequency and/or signal strength.

6. A card-like object (10) for generating a time-dependent signal (16) on a capacitive surface sensor (22)
**wherein**

> the card-like object (10) has an electrically conductive structure (12) comprising a plurality of individual elements (14), which are formed by rectangles, which are arranged essentially parallel to one another on the card-like object (10), wherein deviations from a parallelism up to 2° are possible
> **characterized in that**
> the individual elements (14) have a spacing of 0.1 mm to 30 mm and wherein the time-dependent signal (16) is established by the arrangement of the individual elements (14) on the card-like object (10) and may be generated by a relative movement (20) between an input means (18) and the card-like object (10).

7. The card-like object (10) according to claim 6, **wherein** the individual elements (14) are arranged in parallel to each other along a center line with deviations from a parallelism of up to 2°, wherein some individual elements (14) have a different length or width, a different spacing to each other or are differently displaced with respect to the center line.

8. The card-like object (10) according to claim 6 or 7,
**characterized in that**
the electrically conductive structure (12) comprises at least two galvanically separated individual elements (14), wherein the individual elements (14) are arranged in a plane.

9. Method for producing a card-like object (10) according to any one or more of claims 6 to 8,
**characterized in that**
the individual elements (14) of the electrically conductive structure (12) have a width from 0.1 mm to 20 mm.

10. Method for producing a card-like object (10) according to any one or more of claims 6 to 8,
**characterized in that**
the individual elements (14) of the electrically conductive structure (12) are formed with respect to size, spacing and shape so that a time-dependent signal (16) on a capacitive surface sensor (22) resulting from a relative movement (20) between an input means (18) and the card-like object (10) is changed relative to a reference input made with the input means (18) without using the card-like object (10).

11. Method for producing a card-like object (10) according to any one or more of claims 6 to 9
**characterized in that**
the electrically conductive structure (12) is produced in a multistage process comprising the following steps:

a) applying an electrically conductive basic structure (28) to a substrate by means of a foil transfer method or electrically conductive paint,
b) selectively removing parts of the electrically conductive base structure (28) by means of a laser, whereby an electrically conductive structure (12) is obtained with individual elements (14) having spatially separated areas.

12. Method for producing a card-like object (10) according to any one or more of claims 6 to 9,
**characterized in that**
the electrically conductive structure (12) is produced in a multistage process comprising the following steps:

a) applying an electrically conductive basic structure (28) to a substrate by means of a foil transfer method or electrically conductive paint,
b) selectively applying electrically conductive bridges and/or additional electrically conductive elements by means of inkjet printing by means of which electrically conductive paint is applied to the card-like object (10), whereby an electrically conductive structure (12) with individual elements (14) is obtained.

13. A use of the card-like object (10) according to any one or more of claims 6 to 9 for generating a time-dependent signal (16) on a capacitive surface sensor (22) by a relative movement (20) between the input means (18) and the card-like object (10).

14. The use according to claim 13,
**characterized in that**
generating the time-dependent signal (16) on the capacitive surface sensor (22) comprises providing a first active contact (24) and a second active contact (26), wherein the first active contact (24) exists between the card-like object (10) and the capacitive surface sensor (22), and the second active contact (26) exists between the card-like object (10) and the input means (18), wherein the first active contact (24) and the second active contact (26) exist simultaneously.

**Revendications**

1. Procédé de production d'un signal dépendant du temps (16) sur un capteur de zone capacitif (22)
**caractérisé en ce que**
un objet de carte (10) présente une structure électriquement conductrice (12) qui comprend une pluralité d'éléments individuels (14) qui sont agencés sur l'objet de carte (10), dans lequel le signal dépendant du temps (16) est défini par la disposition des éléments individuels (14) sur l'objet de carte (10) et produit par un mouvement relatif (20) entre un moyen d'entrée (18) et l'objet de carte (10).

2. Utilisation du procédé selon la revendication 1 pour l'identification d'un objet de carte (10)
**comprenant les étapes suivantes**

a. la fourniture de l'objet de carte (10) avec une structure électriquement conductrice (12) qui comprend une pluralité d'éléments individuels (12),

b. la disposition de l'objet de carte (10) sur un capteur de zone capacitif (22), moyennant quoi un premier contact actif (24) est formé entre l'objet de carte (10) et le capteur de zone capacitif (22),

c. la réalisation d'un mouvement relatif (20) entre un moyen d'entrée (18) et l'objet de carte (10), moyennant quoi un second contact actif (26) est formé entre l'objet de carte (10) et le moyen d'entrée (18),

d. la production d'un signal dépendant du temps (16) en fonction du mouvement relatif (20),

e. l'évaluation du signal dépendant du temps (16) par le dispositif contenant le capteur de zone (22) pour l'identification de l'objet de carte (10)

dans laquelle le signal dépendant du temps (16), qui est produit sur le capteur de zone capacitif (22), est défini par la disposition des éléments individuels (14) sur l'objet de carte (10) .

3. Procédé selon la revendication 1 et/ou 2
**caractérisé en ce que**
la production du signal dépendant du temps (16) sur le capteur de zone capacitif (22) et/ou l'identification de l'objet de carte (10) comprend un premier contact actif et un second contact actif, dans lequel un premier contact actif existe entre l'objet de carte (10) et le capteur de zone capacitif (22) et un second contact actif entre l'objet de carte (10) et le moyen d'entrée (18), dans lequel au moins le second contact actif est formé dynamiquement.

4. Procédé selon la revendication 3
**caractérisé en ce que**
le premier contact actif et le second contact actif existent simultanément et l'objet de carte (10) est agencé entre le capteur de zone (22) et le moyen d'entrée (18).

5. Procédé selon une ou plusieurs des revendications précédentes
**caractérisé en ce que**
le signal dépendant du temps (16) est au moins partiellement modifié en termes de position, de direction, de forme, d'interruption du signal, de fréquence et/ou d'intensité du signal.

6. Objet de carte (10) pour la production d'un signal dépendant du temps (16) sur un capteur de zone capacitif (22)
**dans lequel**

l'objet de carte (10) présente une structure électriquement conductrice (12) qui comprend une pluralité d'éléments individuels (14) formés par des rectangles et agencés essentiellement parallèlement les uns aux autres sur l'objet de carte (10), dans lequel des écarts par rapport à un parallélisme jusqu'à 2° peuvent se produire
**caractérisé en ce que**
les éléments individuels (14) sont espacés de 0,1 mm à 30 mm et dans lequel le signal dépendant du temps (16) est défini par la disposition des éléments individuels (14) sur l'objet de carte (10) et peut être produit par un mouvement relatif (20) entre un moyen d'entrée (18) et l'objet de carte (10).

7. Objet de carte (10) selon la revendication 6 **dans lequel** les éléments individuels (14) sont agencés essentiellement parallèlement les uns aux autres le long d'une ligne centrale avec des écarts de parallélisme allant jusqu'à 2°, dans lequel certains éléments individuels (14) présentent une longueur ou une largeur différente, une distance différente les uns des autres ou sont décalés différemment par rapport à la ligne centrale.

8. Objet de carte (10) selon la revendication 6 ou 7
**caractérisé en ce que**
la structure électriquement conductrice (12) comprend au moins deux éléments individuels (14) séparés galvaniquement l'un de l'autre, dans lequel les éléments individuels (14) sont agencés dans un plan.

9. Objet de carte (10) selon une ou plusieurs des revendications 6 à 8
**caractérisé en ce que**
les éléments individuels (14) de la structure électriquement conductrice (12) ont une largeur de 0,1 mm à 20 mm.

10. Procédé de fabrication d'un objet de carte (10) selon une ou plusieurs des revendications 6 à 8
**caractérisé en ce que**
les éléments individuels (14) de la structure électriquement conductrice (12) sont conçus en termes de taille, d'espacement et de forme de manière à ce que le signal dépendant du temps (16) résultant du mouvement relatif (20) sur le capteur de zone capacitif (22) soit changé par rapport à une entrée de référence avec le moyen d'entrée (18), sans utiliser l'objet de carte (10) .

11. Procédé de fabrication d'un objet de carte (10) selon une ou plusieurs des revendications 6 à 9 **caractérisé en ce que**
la structure électriquement conductrice (12) est fabriquée dans un procédé en plusieurs étapes comprenant les étapes suivantes :

a) l'application d'une structure de base électriquement conductrice (28) sur un substrat au moyen de processus de transfert de film ou de peinture électriquement conductrice,
b) l'enlèvement sélectif de parties de la structure de base électriquement conductrice (28) au moyen d'un laser, moyennant quoi une structure électriquement conductrice (12) avec des éléments individuels (14) est obtenue, lesquels présentent des zones qui sont spatialement séparées les unes des autres.

12. Procédé de fabrication d'un objet de carte (10) selon une ou plusieurs des revendications 6 à 9 **caractérisé en ce que**
la structure électriquement conductrice (12) est fabriquée dans un procédé en plusieurs étapes comprenant les étapes suivantes :

a) l'application d'une structure de base électriquement conductrice (28) sur un substrat au moyen de processus de transfert de film ou de peinture électriquement conductrice,
b) l'application sélective de ponts électriquement conducteurs et/ou d'éléments électriquement conducteurs supplémentaires au moyen d'une impression à jet d'encre, avec laquelle une peinture électriquement conductrice est appliquée sur l'objet de carte (10), moyennant quoi une structure électriquement conductrice (12) avec des éléments individuels (14) est obtenue.

13. Utilisation de l'objet de carte (10) selon une ou plusieurs des revendications 6 à 9 pour la production d'un signal dépendant du temps (16) sur un capteur de zone capacitif (22) par un mouvement relatif (20) entre le moyen d'entrée (18) et l'objet de carte (10).

14. Utilisation selon la revendication 13 **caractérisée en ce que**
la production du signal dépendant du temps (16) sur le capteur de zone capacitif (22) comprend un premier contact actif et un second contact actif, dans lequel un premier contact actif existe entre l'objet de carte (10) et le capteur de zone capacitif (22) et un second contact actif entre l'objet de carte (10) et le moyen d'entrée (18), dans lequel le premier contact actif et le second contact actif existent simultanément.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

12

14

10

Fig. 16

Fig. 17

Fig. 18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011154524 A1
- DE 102012023082 A1
- DE 102013101881 A1
- US 20100045627 A1